# EUROPEAN PATENT APPLICATION

(11) **EP 4 610 978 A1**
(43) Date of publication of application: **03.09.2025**
(21) Application number: 23881840.5
(22) Date of filing: 24.10.2023
(51) Int. Cl.: G10L 15/06, G10L 15/22, G10L 15/26

(54) **DATA PROCESSING SYSTEM AND METHOD FOR SPEECH RECOGNITION MODEL, AND SPEECH RECOGNITION METHOD**

(30) Priority: 27.10.2022 CN 202211329674
(71) Applicant: Alibaba Innovation Private Limited, Singapore 189554 (SG)
(72) Inventor: ZHOU, Xiaohuan, Beijing 100102 (CN); ZHOU, Chang, Beijing 100102 (CN)
(74) Representative: Barker Brettell LLP
(86) International application number: PCT/CN2023/126244
(87) International publication number: WO 2024/088262

(57) **Abstract**

A data processing system and method for a speech recognition model, a speech recognition method, a computing device and a readable storage medium. The system includes a cloud-side device 202 and an end-side device 201. The cloud-side device is configured to encode, by using an encoder, sample speech data to obtain a speech feature of the sample speech data, where the encoder is pre-trained based on performing a Chinese pronunciation unit predicting task on pre-training speech data; input the speech feature into a decoder to obtain predicted Chinese text, where the decoder is pre-trained based on performing a text prediction task on a pre-training Chinese pronunciation unit; pre-train a model including the encoder and the decoder based on the predicted Chinese text and sample Chinese text, and in a case where a pre-training stop condition is met, acquire a model parameter of a speech recognition model obtained by pre-training; send the model parameter of the speech recognition model to the end-side device 201.

## Description

The present application claims priority to Chinese patent application No. 202211329674.7, filed to China National Intellectual Property Administration on October 27, 2022 and entitled "DATA PROCESSING SYSTEM AND METHOD FOR SPEECH RECOGNITION MODEL, AND SPEECH RECOGNITION METHOD", which is hereby incorporated by reference in its entirety.

### TECHNICAL FIELD

Embodiments of the present specification relate to the field of computer technologies and, in particular, to a data processing system and method for a speech recognition model, and a speech recognition method.

### BACKGROUND

A function of a speech recognition model is to convert inputted speech into text, and the speech recognition model is usually trained based on speech-text labelled data. In order to improve the accuracy of the speech recognition model obtained by training, a large number of speech-text labelled data is usually required. However, labelling for data is usually performed manually, which requires a lot of manpower and material resources, and is inefficient and difficult to achieve.

Therefore, there is an urgent need for an efficient data processing method for a speech recognition model.

### SUMMARY

In view of this, an embodiment of the present specification provides a data processing system for a speech recognition model. At the same time, one or more embodiments of the present specification involve a data processing method for a speech recognition model, a speech recognition method, a data processing apparatus for a speech recognition model, a speech recognition apparatus, a computing device, a computer-readable storage medium and a computer program, so as to solve the technical defects existing in the prior art.

According to a first aspect of an embodiment of the present specification, there is provided a data processing system for a speech recognition model, including:
a cloud-side device, configured to: acquire a sample set, where the sample set includes a plurality of sample pairs, and the sample pair includes sample speech data and sample Chinese text; encode, by using an encoder, the sample speech data to obtain a speech feature of the sample speech data, where the encoder is pre-trained based on performing a Chinese pronunciation unit predicting task on pre-training speech data; input the speech feature into a decoder to obtain predicted Chinese text, where the decoder is pre-trained based on performing a text prediction task on a pre-training Chinese pronunciation unit; pre-train a model including the encoder and the decoder based on the predicted Chinese text and the sample Chinese text, and in a case where a pre-training stop condition is met, acquire a model parameter of a speech recognition model obtained by pre-training;
   where the cloud-side device is further configured to send the model parameter of the speech recognition model obtained by pre-training to an end-side device;
the end-side device, configured to perform speech recognition on to-be-recognized speech data by using the speech recognition model to obtain target text corresponding to the to-be-recognized speech data.

According to a second aspect of an embodiment of the present specification, there is provided a data processing method for a speech recognition model, applied to a cloud-side device, where the cloud-side device is connected with a plurality of end-side devices, and the method includes:
acquiring a sample set, where the sample set includes a plurality of sample pairs, and the sample pair includes sample speech data and sample Chinese text;
encoding, by using an encoder, the sample speech data to obtain a speech feature of the sample speech data, where the encoder is pre-trained based on performing a Chinese pronunciation unit predicting task on pre-training speech data;
inputting the speech feature into a decoder to obtain predicted Chinese text, where the decoder is pre-training based on performing a text prediction task on a pre-training Chinese pronunciation unit;
pre-training a model including the encoder and the decoder based on the predicted Chinese text and the sample Chinese text, and in a case where a pre-training stop condition is met, acquiring a model parameter of a speech recognition model obtained by pre-training;
sending the model parameter of the speech recognition model obtained by pre-training to a first end-side device, where the first end-side device is any one of the plurality of end-side devices.

According to a third aspect of an embodiment of the present specification, there is provided a speech recognition method, applied to an end-side device, where the end-side device is connected with a cloud-side device, and the method includes:
acquiring to-be-recognized speech data;
encoding, by using an encoder of a speech recognition model, the to-be-recognized speech data to obtain a speech feature of the to-be-recognized speech data, where the speech recognition model is obtained by pre-training by the cloud-side device through the data processing method for the speech recognition model according to the second aspect;
inputting the speech feature into the decoder of the speech recognition model to obtain target text corresponding to the to-be-recognized speech data.

According to a fourth aspect of an embodiment of the present specification, there is provided a data processing apparatus for a speech recognition model, applied to a cloud-side device, where the cloud-side device is connected with a plurality of end-side devices, and the apparatus includes:
a first acquisition module, configured to acquire a sample set, where the sample set includes a plurality of sample pairs, and the sample pair includes sample speech data and sample Chinese text;
a first encoding module, configured to encode, by using an encoder, the sample speech data to obtain a speech feature of the sample speech data, where the encoder is pre-trained based on performing a Chinese pronunciation unit predicting task on pre-training speech data;
a first decoding module, configured to input the speech feature into a decoder to obtain predicted Chinese text, where the decoder is pre-trained based on performing a text prediction task on a pre-training Chinese pronunciation unit;
a pre-training module, configured to pre-train a model including the encoder and the decoder based on the predicted Chinese text and the sample Chinese text, and in a case where a pre-training stop condition is met, acquire a model parameter of a speech recognition model obtained by pre-training;
a first sending module, configured to send the model parameter of the speech recognition model obtained by pre-training to a first end-side device, where the first end-side device is any one of the plurality of end-side devices.

According to a fifth aspect of an embodiment of the present specification, there is provided a speech recognition apparatus, applied to an end-side device, where the end-side device is connected with a cloud-side device, and the apparatus includes:
a second acquisition module, configured to acquire to-be-recognized speech data;
a second encoding module, configured to encode, by using an encoder of a speech recognition model, the to-be-recognized speech data to obtain a speech feature of the to-be-recognized speech data, where the speech recognition model is obtained by pre-training by the cloud-side device through the data processing method for the speech recognition model according to the second aspect;
a second decoding module, configured to input the speech feature into the decoder of the speech recognition model to obtain target text corresponding to the to-be-recognized speech data.

According to a sixth aspect of an embodiment of the present specification, there is provided a computing device, including:
a memory and a processor;
where the memory is configured to store computer-executable instructions, the processor is configured to execute the computer-executable instructions, and when the computer-executable instructions are executed by the processor, the steps of the data processing method for the speech recognition model according to the second aspect or the steps of the speech recognition method according to the third aspect are implemented.

According to a sixth aspect of an embodiment of the present specification, there is provided a computer-readable storage medium, having computer-executable instructions stored thereon, and when the instructions are executed by a processor, the steps of the data processing method for the speech recognition model according to the second aspect or the steps of the speech recognition method according to the third aspect are implemented.

According to a seventh aspect of an embodiment of the present specification, there is provided a computer program, and when the computer program is executed in a computer, the computer is caused to execute the steps of the data processing method for the speech recognition model according to the second aspect or implement the steps of the speech recognition method according to the third aspect.

The data processing system for the speech recognition model provided by the embodiments of the present specification includes the end-side device and the cloud-side device, and the cloud-side device is configured to: acquire the sample set, where the sample set includes the plurality of sample pairs, and the sample pair includes the sample speech data and the sample Chinese text; encode, by using the encoder, the sample speech data to obtain the speech feature of the sample speech data, where the encoder is pre-trained based on performing the Chinese pronunciation unit predicting task on the pre-training speech data; input the speech feature into the decoder to obtain the predicted Chinese text, where the decoder is pre-trained based on performing the text prediction task on the pre-training Chinese pronunciation unit; pre-train the model including the encoder and the decoder based on the predicted Chinese text and the sample Chinese text, and in the case where the pre-training stop condition is met, acquire the model parameter of the speech recognition model obtained by pre-training; the cloud-side device is further configured to send the model parameter of the speech recognition model obtained by pre-training to the end-side device; the end-side device is configured to perform speech recognition on the to-be-recognized speech data by using the speech recognition model to obtain the target text corresponding to the to-be-recognized speech data. That is, in this solution, at least a task of predicting Chinese text according to speech data, a Chinese pronunciation unit predicting task of predicting a Chinese pronunciation unit according to speech data, and a text prediction task of predicting Chinese text according to a Chinese pronunciation unit are executed during a phase of pre-training the speech recognition model. Therefore, when training the speech recognition model in a practical application process, the number of labeled sample speech data and sample Chinese text is relatively small, which reduces the burden of labeling personnel and reduces the difficulty of acquiring labeled data. In addition, the encoder is pre-trained based on performing the Chinese pronunciation unit predicting task on the pre-training speech data, so that the encoder has the capability of predicting the Chinese pronunciation unit through the speech data. Since Chinese an ideographic, a gap between Chinese text and speech data is large, and the Chinese pronunciation unit can serve as a bridge between the Chinese text and the speech data to narrow the gap between the two. The encoder can convert the speech data into the Chinese pronunciation unit by pre-training, and a better encoder can be obtained for a speech recognition task. Moreover, the decoder is pre-trained based on performing the text prediction task on the pre-training Chinese pronunciation unit, so that the decoder can learn the capability of constructing Chinese text according to a Chinese pronunciation unit, and the language modeling capability of the decoder is improved. That is, through pre-training, the encoder and the decoder have certain speech recognition capability. The model composed of the encoder and the decoder is pre-trained by performing a speech-text prediction task, so that the parameter of the model is adjusted in a direction more adaptive to a speech recognition task, and the training efficiency and the training accuracy can be improved. Moreover, an input into the model used in a pre-training process is pre-training speech data or pre-training Chinese pronunciation units, and the two are similar to speech data modality inputted when applying the speech recognition model, so that the speech recognition model is more suitable for a downstream speech recognition task and the recognition accuracy of the speech recognition model obtained by pre-training can be improved to a certain extent.

### BRIEF DESCRIPTION OF THE DRAWINGS

FIG. 1 shows a schematic flowchart diagram of a data processing method for a speech recognition model and a speech recognition method under an architecture of a data processing system for a speech recognition model provided by an embodiment of the present specification.
FIG. 2 shows a schematic diagram of a data processing system for a speech recognition model provided by an embodiment of the present specification.
FIG. 3 shows a data flow diagram of a data processing method for a speech recognition model provided by an embodiment of the present specification.
FIG. 4a shows a data flow diagram of a method for determining a Chinese pronunciation unit provided by an embodiment of the present application.
FIG. 4b shows a data flow diagram for pre-training an encoder provided by an embodiment of the present application.
FIG. 5 shows another data flow diagram for pre-training an encoder provided by an embodiment of the present application.
FIG. 6 shows a data flow diagram for pre-training a decoder provided by an embodiment of the present application.
FIG. 7 shows another data flow diagram for pre-training a decoder provided by an embodiment of the present specification.
FIG. 8 shows a data flow diagram of a method for fine-tuning a speech recognition model provided by an embodiment of the present specification.
FIG. 9 shows a flowchart of a data processing method for a speech recognition model applied to a cloud-side device provided by an embodiment of the present specification.
FIG. 10 shows a flowchart of a speech recognition method applied to an end-side device provided by an embodiment of the present specification.
FIG. 11 shows a data flow diagram of a speech recognition task performed by a speech recognition model provided by an embodiment of the present specification.
FIG. 12 shows a flowchart of a processing process of a data processing method for a speech recognition model provided by an embodiment of the present specification.
FIG. 13 shows a data flow diagram for joint training of a speech recognition model provided by an embodiment of the present application.
FIG. 14 shows a schematic structural diagram of a data processing apparatus for a speech recognition model applied to a cloud-side device provided by an embodiment of the present specification.
FIG. 15 shows a schematic structural diagram of a speech recognition apparatus provided by an embodiment of the present specification.
FIG. 16 shows a structural block diagram of a computing device provided by an embodiment of the present specification.

### DESCRIPTION OF EMBODIMENTS

In the following description, numerous specific details are set forth to facilitate a thorough understanding of the present specification. However, the present specification may be implemented in many other ways different from those described herein, and those skilled in the art may make similar extensions without departing from the connotation of the present specification. Thus, the present specification is not limited by the specific implementations disclosed below.

The terms used in one or more embodiments of the present specification are only for the purpose of describing specific embodiments and are not intended to limit one or more embodiments of the present specification. The singular forms "a", "the" and "said" used in one or more embodiments of the present specification and the appended claims are also intended to include the plural forms, unless the context clearly indicates otherwise. It should also be understood that the term "and/or" used in one or more embodiments of the present specification refers to including any or all possible combinations of one or more associated listed items.

It should be understood that although terms such as first, second, etc. may be used to describe various information in one or more embodiments of the present specification, such information should not be limited to these terms. These terms are only used to distinguish the same type of information from each other. For example, without departing from the scope of one or more embodiments of the present specification, the first may also be referred to as the second, and similarly, the second may also be referred to as the first. Depending on the context, the word "if" as used herein may be interpreted as "when" or "in response to determining".

It should be noted that all user-related information and user-related data involved in the embodiments of the present specification are information and data which are authorized by the user or fully authorized by all parties.

First, terms and nouns involved in one or more embodiments of the present specification are explained.

Speech recognition model: a model used to perform recognition on inputted speech data to obtain text.

Encoder: an encoder is used to encode inputted speech, text, Chinese pronunciation units, etc., to represent the input in a form of a feature vector.

Decoder: a decoder is used to decode an inputted feature vector to obtain speech, text, etc.

Feature encoding layer: a feature encoding layer is used to encode an inputted feature to capture an association relationship between features.

Speech feature: a speech feature is a vectorized representation of speech.

Speech encoder: a speech encoder is used to encode speech to obtain a vectorized representation of the speech, that is, a speech feature.

CTC (Connectionist temporal classification): CTC is mainly used to deal with the problem that an input sequence is longer than an output sequence, and is an algorithm to realize alignment of input and output sequence labels.

A function of the speech recognition model is to convert speech data into text, and training of the speech recognition model usually requires a large amount of labeled data. Pre-training with unlabeled data can make the model easier to achieve good effect at a lower cost. There are mainly two structures commonly used in an end-to-end speech recognition model. One is a temporal connection relationship prediction (CTC) structure, and the other is an encoder-decoder structure. A speech recognition model of the encoder-decoder structure takes both speech data and text grammar information into consideration, while the CTC structure only takes speech data into consideration, so the effect of the encoder-decoder structure is usually better than that of the CTC structure. Compared with other phonetic languages, such as English, Chinese is an ideographic language, so in a process of speech recognition, an assistance of text grammatical information is more important. On the other hand, a training of the end-to-end speech recognition model usually requires a large number of speech-text pair labelled data, especially for an ideographic language such as Chinese, for which end-to-end recognition is more difficult.

At present, unsupervised pre-training has brought significant improvement to downstream tasks in various fields. As for pre-training of a speech recognition model, a series of methods of pre-training an encoder by using unlabeled speech data has also been proposed, such as HuBERT and Data2Vec. These pre-training methods are usually only applied to models of the CTC structure for tuning, but there will be problems when applied to the encoder-decoder structure. This is because the decoder does not participate in pre-training. STPT and Speech2C further propose that a decoder may be pre-trained by using unlabeled text or unlabeled speech data, and SpeechT5 also proposes that an encoder-decoder model may be pre-trained by using unlabeled text and unlabeled speech data. There are three problems in these methods: one is that they do not verify the complementarity between different pre-training tasks; the second is that they are all designed based on English ideographic language, ignoring characteristics of Chinese ideographic language; and the third is that they do not fully use unlabeled text data, leading to an insignificant improvement brought by unlabeled text data.

For a speech recognition task, a mainstream speech pre-training method with a good effect is classified into the following two types.

The first one is speech representation single-modal pre-training, such as Wav2vec 2.0, HuBERT, Data2vec and Speech2C. This method only uses unlabeled speech data, and obtains better speech modeling capability through mask prediction. The disadvantage is that this method lacks pre-training for text semantic information modeling, and an application thereof on the speech recognition model of the encoder-decoder structure usually has a poor effect.

The second one is speech-text multi-modal pre-training, such as STPT and SpeechT5. In addition to using unlabeled speech data, unlabeled text data is also introduced to participate in pre-training, and the capability of the encoder-decoder structure model to model speech information and text grammar information is pre-trained.

The defect of STPT lies in that: 1) unlabeled speech data does not participate in parameter updating of a decoder; 2) the problem of model collapse easily occurs.

SpeechT5 pre-training is mainly to obtain a universal speech model, and thus a design of a pre-training task is not completely considered for a speech recognition task. Therefore, for speech recognition model pre-training, its defect lies in that: 1) a sequence-to-sequence task designed by using unlabeled speech data is a speech frame reconstruction task, and this task is more beneficial to a speech synthesis task, but will cause damage to the speech recognition task; 2) when using unlabeled text data, an input into the model is text. For Chinese, which is a pictograph, a gap between two modalities of text and speech is quite large, which brings difficulty to joint training.

Therefore, the present specification provides a data processing system for a speech recognition model, which can solve the above technical problems, and its specific implementation can be found in the relevant descriptions of the following embodiments.

In the present specification, a data processing system for a speech recognition model is provided. The present specification also relates to a data processing method for a speech recognition model, a speech recognition method, a data processing apparatus for a speech recognition model, a speech recognition apparatus, a computing device, and a computer-readable storage medium, which are described in detail one by one in the following embodiments.

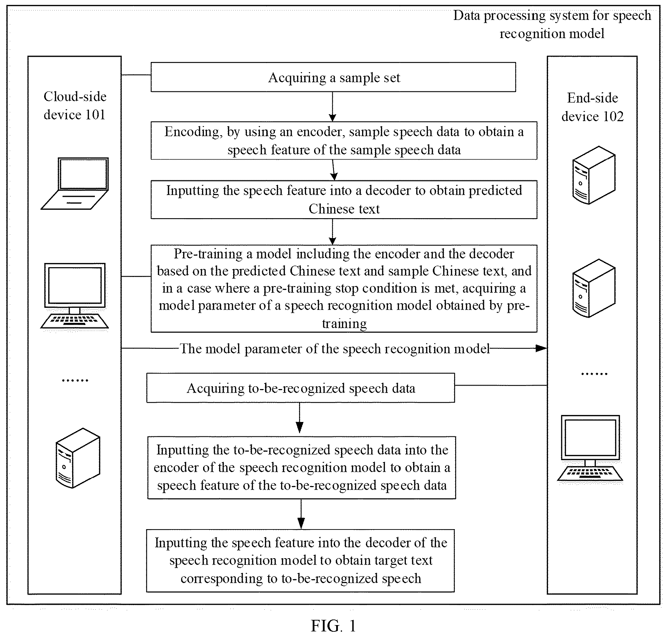

Referring to FIG. 1, FIG. 1 shows a schematic flowchart diagram of a data processing method for a speech recognition model and a speech recognition method under an architecture of a data processing system of a speech recognition model provided by an embodiment of the present specification.

The system may include a cloud-side device 101 and an end-side device 102. The cloud-side device 101 is configured to train a speech recognition model, and the end-side device 102 is configured to perform a speech recognition task based on the speech recognition model obtained by training.

The cloud-side device 101 may be a central cloud device of a distributed cloud architecture, and the end-side device 102 may be an edge cloud device of the distributed cloud architecture. The cloud-side device 101 and the end-side device 102 may be service-end devices such as a conventional server, a cloud server or a server array, and may also be terminal devices, which are not limited in the embodiments of the present specification. Moreover, the cloud-side device 101 provides superior computing and storage capabilities and is far away from users, while the end-side device 102 has a large deployment range and is close to users. The end-side device 102 is an extension of the cloud-side device 101. The computing capability of the cloud-side device 101 may sink into the end-side device 102, and service requirements that cannot be met under a centralized cloud computing mode can be solved through integration and collaborative management of end and cloud.

In one or more embodiments of the present specification, the cloud-side device 101 acquires a sample set, where the sample set includes a plurality of sample pairs, and the sample pair includes sample speech data and sample Chinese text; encodes, by using an encoder, the sample speech data to obtain a speech feature of the sample speech data, where the encoder is pre-trained based on performing a Chinese pronunciation unit predicting task on pre-training speech data; inputs the speech feature into a decoder to obtain predicted Chinese text, where the decoder is pre-trained based on performing a text prediction task on a pre-training Chinese pronunciation unit; pre-trains a model including the encoder and the decoder based on the predicted Chinese text and the sample Chinese text, and in a case where a pre-training stop condition is met, acquires a model parameter of a speech recognition model obtained by pre-training, and sends the model parameter of the speech recognition model to the end-side device 102.

After receiving the speech recognition model, the end-side device 102 performs speech recognition on to-be-recognized speech data by using the speech recognition model to obtain target text corresponding to the to-be-recognized speech data. Specifically, the end-side device 102 acquires the to-be-recognized speech data, inputs the to-be-recognized speech data to the encoder of the speech recognition model to obtain a speech feature of the to-be-recognized speech data, and inputs the speech feature to the decoder of the speech recognition model to obtain the target text corresponding to the to-be-recognized speech data.

In the data processing system for the speech recognition model provided by the embodiments of the present specification, during a phase of pre-training the speech recognition model, the cloud-side device at least executes a task of predicting Chinese text according to speech data, a Chinese pronunciation unit predicting task of predicting a Chinese pronunciation unit according to speech data, and a text prediction task of predicting Chinese text according to a Chinese pronunciation unit. Therefore, when training the speech recognition model in a practical application process, the number of labeled sample speech data and sample Chinese text is relatively small, which reduces the burden of labeling personnel and the difficulty of acquiring labeled data. In addition, the encoder is pre-trained based on performing the Chinese pronunciation unit predicting task on the pre-training speech data, so that the encoder has the capability of predicting the Chinese pronunciation unit through the speech data. Since Chinese is ideographic, a gap between Chinese text and speech data is large, and the Chinese pronunciation unit can serve as a bridge between the Chinese text and the speech data to narrow the gap between the two. The encoder can convert the speech data into the Chinese pronunciation unit by pre-training, and a better encoder can be obtained for a speech recognition task. Moreover, the decoder is pre-trained based on performing the text prediction task on the pre-training Chinese pronunciation unit, so that the decoder can learn the capability of constructing Chinese text according to a Chinese pronunciation unit, and the language modeling capability of the decoder is improved. That is, through pre-training, the encoder and the decoder have certain speech recognition capability. The model composed of the encoder and the decoder is pre-trained by performing a speech-text prediction task, so that the parameter of the model is adjusted in a direction more adaptive to a speech recognition task, and the training efficiency and the training accuracy can be improved. Moreover, an input into the model used in a pre-training process is pre-training speech data or pre-training Chinese pronunciation units, and the two are similar to speech data modality inputted when applying the speech recognition model, so that the speech recognition model is more suitable for a downstream speech recognition task and the recognition accuracy of the speech recognition model obtained by pre-training can be improved to a certain extent.

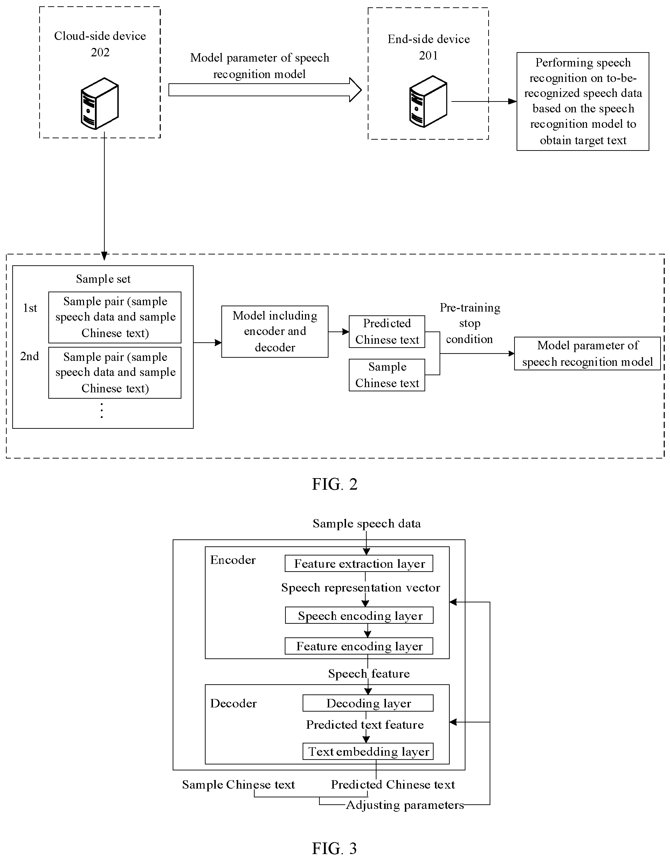

FIG. 2 shows a schematic diagram of a data processing system for a speech recognition model provided by an embodiment of the present specification. Referring to FIG. 2, the data processing system for the speech recognition model provided by the embodiment of the present specification includes an end-side device 201 and a cloud-side device 202 that is communicatively connected with the end-side device 201.

The cloud-side device 202 is configured to acquire a sample set, where the sample set includes a plurality of sample pairs, and the sample pair includes sample speech data and sample Chinese text; encode, by using an encoder, the sample speech data to obtain a speech feature of the sample speech data, where the encoder is pre-trained based on performing a Chinese pronunciation unit predicting task on pre-training speech data; input the speech feature into a decoder to obtain predicted Chinese text, where the decoder is pre-trained based on performing a text prediction task on a pre-training Chinese pronunciation unit; pre-train a model including the encoder and the decoder based on the predicted Chinese text and the sample Chinese text, and in a case where a pre-training stop condition is met, acquire a model parameter of a speech recognition model obtained by pre-training.

The cloud-side device 202 is further configured to send the model parameter of the speech recognition model obtained by pre-training to the end-side device;

The end-side device 201 is configured to perform speech recognition on to-be-recognized speech data by using the speech recognition model to obtain target text corresponding to the to-be-recognized speech data.

In one or more embodiments of the present specification, since the speech recognition model needs to perform a speech recognition task of predicting Chinese text according to speech data, training of the speech recognition model is supervised training. Therefore, the sample pairs composed of the sample speech data and the sample text needs to be acquired, and since the speech recognition model provided by the present specification is a speech recognition model for Chinese language, the acquired sample text is the sample Chinese text. Moreover, there is a corresponding relationship between the sample speech data and the sample Chinese text in each sample pair.

As an example, the cloud-side device 202 may acquire the plurality of sample pairs from an open-source sample library, and the plurality of sample pairs constitute the sample set. Exemplarily, the sample speech data may be any speech data, may be a paragraph or a word. For example, the sample speech data may be voice chat, speech, music, meeting recordings and so on.

In the embodiments of the present specification, the cloud-side device 202 acquires the sample set including the plurality of sample pairs, each sample pair including the sample speech data and the sample Chinese text, pre-trains the model including the encoder and the decoder according to the sample set to obtain the speech recognition model, and sends the model parameter of the speech recognition model obtained by pre-training to the end-side device 201, so that the end-side device 201 can perform speech recognition based on the speech recognition model.

The cloud-side device 202 is configured to encode the sample speech data by using the encoder to obtain the speech feature of the sample speech data, and the encoder is pre-trained based on performing the Chinese pronunciation unit predicting task on the pre-training speech data.

The Chinese pronunciation unit predicting task is to predict a corresponding Chinese pronunciation unit according to inputted pre-training speech data. The Chinese pronunciation unit is a component unit of Chinese pronunciation, which may be pinyin, or may be syllable, or may be Chinese phoneme. For example, the Chinese pronunciation unit may be "yin", or may be "in", "i", "y", etc.

The speech feature of the sample speech data is a vectorized representation of the sample speech data, which is obtained by combining a contextual relationship between words in the sample speech data.

It should be noted that although the encoder is pre-trained based on performing the Chinese pronunciation unit predicting task on the pre-training speech data, such pre-training may be performed before pre-training of the model composed of the decoder and the encoder, or such pre-training may be performed during the pre-training of the model composed of the decoder and the encoder, which is not limited by the embodiments of the present specification.

Exemplarily, the encoder may be any encoder in a model including an encoding function. For example, the encoder may be an encoder of a transformer model, or the encoder may be an encoder of a model such as BERT, CNN (Convolutional Neural Network, convolutional neural network), LSTM (Long Short Term Memory, long short term memory neural network), GRU (Gate Recurrent Unit, gate recurrent unit structure) and so on. Moreover, the encoder may include M+N blocks (blocks), where both M and N are positive integers greater than 1.

In a first possible implementation of the present specification, the sample speech data may be directly inputted into the encoder, and the encoder encodes the sample speech data through the M+N blocks to obtain the speech feature corresponding to the sample speech data.

In a second possible implementation of the present specification, the encoder may include a speech encoding layer and a feature encoding layer. Exemplarily, the speech encoding layer includes M blocks and the feature encoding layer includes N blocks. The sample speech data is first inputted into the speech encoding layer to obtain an initial speech feature of the sample speech data, and then the initial speech feature is inputted into the feature encoding layer to obtain the speech feature of the sample speech data. The difference between the initial speech feature and the speech feature is that the initial speech feature is a speech context feature obtained through M blocks, and the speech feature is a speech context feature obtained after processing through M+N blocks.

In a third possible implementation of the present specification, the encoder may further include a feature extraction layer, and the feature extraction layer is connected with the speech encoding layer. The sample speech data is inputted into the feature extraction layer for speech representation extraction and down-sampling processing, and features of words in the sample speech data are extracted to obtain a speech representation vector of the sample speech data. Then, the speech representation vector is inputted into the speech encoding layer to obtain the initial speech feature of the sample speech data, and the initial speech feature is inputted into the feature encoding layer to obtain the speech feature of the sample speech data.

The feature extraction layer may be referred to as a feature extractor. As an example, the feature extraction layer may be a component in the encoder, and in a process of performing pre-training on the encoder, the feature extraction layer also participates in the pre-training.

In a fourth possible implementation of the present specification, before the sample speech data is encoded by using the encoder, a spectral feature of the sample speech data may be extracted first, then the spectral feature is inputted into the encoder to obtain the speech feature of the sample speech data, and the speech feature combines a semantic relationship of context in the sample speech data.

As an example, the spectral feature of the sample speech data may be extracted by using a linear prediction cepstral coefficient algorithm or the Mel-frequency cepstral coefficient or a spectral feature extraction model obtained by pre-training. Moreover, the linear prediction cepstral coefficient algorithm or the Mel frequency cepstral coefficient algorithm is based on cepstrum, which more conforms to the principle of human hearing and is an effective spectral feature extraction algorithm.

In the embodiments of the present specification, the encoder is pre-trained based on performing the Chinese pronunciation unit predicting task on the pre-training speech data, the encoder can learn the capability of predicting a Chinese pronunciation unit through speech, that is, the capability of encoding speech data, and pre-training the model composed of the encoder and the decoder while pre-training the encoder can accelerate the training speed and improve the training efficiency.

The cloud-side device 202 is configured to input the speech feature into the decoder to obtain the predicted Chinese text, and the decoder is pre-trained based on performing the text prediction task on the pre-training Chinese pronunciation unit.

The text prediction task is to predict a corresponding Chinese text according to an inputted pre-training Chinese pronunciation unit.

Exemplarily, the decoder may be any decoder in a model with a decoding function. For example, the decoder may be a decoder of a transformer model, or the decoder may be a decoder of a model such as BERT, CNN, LSTM, GRU and so on. Also, the decoder may include X blocks (blocks), where X is a positive integer greater than or equal to 1.

In one or more embodiments of the present specification, the decoder may include a decoding layer and a text embedding layer. The speech feature outputted by the encoder is first inputted into the decoding layer to obtain a predicted text feature, and then the predicted text feature is inputted into the text embedding layer to map the predicted text feature into a probability distribution vector, and the probability distribution vector indicates a probability that the sample speech data is certain Chinese text, and Chinese text with the highest probability is determined as the predicted Chinese text corresponding to the sample speech data.

As an example, the decoder decodes the speech feature in an autoregressive manner, and predicts word by word to obtain the predicted Chinese text. In a pre-training stage, when the decoder predicts current Chinese text, its input includes the speech feature outputted by the encoder and a previous text ground-truth feature. In a testing stage, when the decoder predicts current Chinese text, its input includes the speech feature outputted by the encoder and a decoding result of a previous word outputted by the text embedding layer.

That is, the decoder considers a relationship between contexts when decoding, so an obtained decoding result is more accurate, and then the accuracy of the predicted Chinese text is higher.

In one or more embodiments of the present specification, the decoder is pre-trained based on performing the text prediction task on the pre-training Chinese pronunciation unit, so that the decoder can learn the capability of predicting Chinese text through a Chinese pronunciation unit. Since the Chinese pronunciation unit is also a speech feature, the decoder has the capability of constructing text through a speech feature. At the same time, when pre-training the model composed of the encoder and the decoder, the training speed can be accelerated and the training efficiency can be improved. Moreover, since Chinese language is an ideographic language, it is difficult to determine pronunciation according to Chinese text, and the pre-training Chinese pronunciation unit is closer to a modality of speech data than the Chinese text. Therefore, pre-training text data is first converted into a pre-training Chinese pronunciation unit as an input into the model to predict Chinese text, so that an input of a pre-training task is similar to an input of a training task of the speech recognition model, and what is obtained by pre-training can be more applicable to the speech recognition task, and the recognition accuracy of the speech recognition model obtained by training can be improved.

The cloud-side device 202 is configured to pre-train the model composed of the encoder and the decoder based on the predicted Chinese text and the sample Chinese text, and acquire the model parameter of the speech recognition model obtained by pre-training in the case where the pre-training stop condition is met.

In one or more embodiments of the present specification, a loss value may be determined according to the predicted Chinese text and the sample Chinese text. If the loss value is greater than or equal to a loss threshold, the parameter of the model composed of the encoder and the decoder is adjusted based on the loss value, that is, parameters of the encoder and the decoder are adjusted. Then, a return to an execution of encoding the sample speech data by using the encoder is made, and the pre-training is stopped until the pre-training stop condition is met, to obtain the model parameter of the speech recognition model.

In some embodiments of the present specification, the pre-training stop condition may be that the loss value is less than a loss threshold, or the pre-training stop condition may be that the number of iterative pre-training is greater than or equal to a number threshold.

As an example, if a loss value obtained after a pre-training is less than the loss threshold, it indicates that the model composed of the encoder and the decoder has been able to perform speech recognition well, and there is no need to continue training. Therefore, the pre-training is stopped and the model parameter of the speech recognition model obtained by pre-training is obtained.

As another example, the number of iterative pre-training may be recorded, and the number of iterative pre-training may be increased by 1 after each determination of the predicted Chinese sample. If the number of iterative pre-training is greater than the number threshold, it indicates that the pre-training of the model composed of the encoder and the decoder is already sufficient, and if the pre-training is continued, it may not be possible to achieve better effect. Therefore, the pre-training is stopped and the model parameter of the speech recognition model obtained by pre-training is obtained.

In this embodiment of the present application, after obtaining the speech recognition model by pre-training, the cloud-side device 202 sends the model parameter of the speech recognition model to the end-side device 201, so that the end-side device 201 can perform a speech recognition task based on the speech recognition model.

Referring to FIG. 3, FIG. 3 shows a data flow diagram of a data processing method for a speech recognition model provided by an embodiment of the present specification. The speech recognition model includes an encoder and a decoder. The encoder includes a feature extraction layer, a speech encoding layer and a feature encoding layer, and the decoder includes a decoding layer and a text embedding layer. Sample speech data is inputted into the feature extraction layer to obtain a speech representation vector of the sample speech data. The speech representation vector is inputted into the speech encoding layer for encoding, and then an encoding result is inputted into the feature encoding layer to obtain a speech feature. The speech feature is inputted into the decoding layer to obtain a predicted text feature, and the predicted text feature is inputted into the text embedding layer to obtain predicted Chinese text. After the predicted Chinese text is obtained, parameters of each component in a model including the encoder and the decoder are adjusted according to the predicted Chinese text and sample Chinese text until a pre-training stop condition is met to obtain a speech recognition model. Moreover, since the decoder decodes in an autoregressive manner, that is, in a pre-training stage, an input into the decoder includes the speech feature outputted by the encoder and a previous text ground-truth feature, and in a testing stage, an input into the decoder includes the speech feature outputted by the encoder and a decoding result outputted by the text embedding layer.

It should be noted that the above content is a process of pre-training the speech recognition model based on a speech recognition task. However, as described above, the encoder and the decoder are pre-trained through the Chinese pronunciation unit predicting task and the text prediction task respectively. Next, the pre-training process of the encoder and the decoder is described, and in the embodiments of the present specification, the pre-training of the encoder and the decoder may be performed simultaneously.

Part I: the pre-training process of the encoder is described.

In one or more embodiments of the present specification, the cloud-side device 202 is further configured to:
acquire a first pre-training speech set, where the first pre-training speech set includes a plurality of unsupervised first pre-training speech data; encode, by using the encoder, the first pre-training speech data to obtain a first speech feature corresponding to the first pre-training speech data, and determine a first pronunciation unit based on the first speech feature; perform mask processing on the first pre-training speech data; encode, by using the encoder, the first pre-training speech data after mask processing to obtain a second speech feature corresponding to the first pre-training speech data after mask processing, and determine a second pronunciation unit based on the second speech feature; pre-train the encoder based on the first pronunciation unit and the second pronunciation unit corresponding to the first pre-training speech data.

The first pre-training speech data is speech data without labeling.

In the embodiments of the present specification, when pre-training the encoder, a pre-training task used is a speech mask prediction task, in which the encoder outputs a speech feature, that is, by adopting the speech mask prediction task, the speech feature can be determined according to speech data, and a corresponding pronunciation unit can further be determined. Based on this, parameters of the encoder are adjusted, so that the encoder can output more accurate speech features.

As an example, the cloud-side device 202 may obtain the plurality of unsupervised first pre-training speech data from an open-source database, and have the first pre-training speech data compose the first pre-training speech set, and then pre-train the encoder based on the first pre-training speech data. The first pre-training speech data obtained is without any labelling, which reduces the cost of manual labeling.

In some embodiments of the present specification, the first pre-training speech data may be directly inputted into the encoder to obtain the first speech feature corresponding to the first pre-training speech data.

In other embodiments of the present specification, the cloud-side device 202 is further configured to extract a spectral feature of the first pre-training speech data and input the spectral feature of the first pre-training speech data into the encoder to obtain the first speech feature corresponding to the first pre-training speech data.

That is, before the encoder is used to encode the first pre-training speech data, a spectral feature of the first pre-training speech data may be extracted, and then the spectral feature may be inputted into the encoder for encoding to obtain the first speech feature corresponding to the first pre-training speech data. Moreover, in the embodiments of the present specification, the encoder and the decoder are pre-trained simultaneously by using various pre-training tasks, and the spectral feature introduces fewer sound details compared to a waveform feature (speech data). Therefore, using the spectral feature as an input into the encoder makes it difficult for the model composed of the encoder and the decoder to distinguish speech data of different pre-training tasks, so that different pre-training tasks are not independent of each other, and can promote each other and the training effect is thus improved.

As an example, the spectral feature of the first pre-training speech data may be extracted by using a linear prediction cepstral coefficient algorithm or the Mel-frequency cepstral coefficient or a spectral feature extraction model obtained by pre-training.

As an example, the encoder may include the feature extraction layer, the speech encoding layer and the feature encoding layer. Inputting the spectral feature into the encoder for encoding may include: inputting the spectral feature into the feature extraction layer for speech representation extraction and down-sampling processing to obtain a speech representation vector corresponding to the first pre-training speech data, then inputting the speech representation vector into the speech encoding layer to obtain an initial speech feature, and then inputting the initial speech feature into the feature encoding layer to obtain the first speech feature corresponding to the first pre-training speech data. The difference between the initial speech feature and the first speech feature is that the initial speech feature is a speech context feature obtained through M blocks, and the first speech feature is a speech context feature obtained after processing through M+N blocks.

After the first pronunciation unit corresponding to the first pre-training speech data is determined, the first pronunciation unit may be used as a label of the first pre-training speech data. Then the second pronunciation unit corresponding to the first pre-training speech data is predicted through mask prediction, and the encoder is pre-trained according to the second pronunciation unit and the first pronunciation unit.

In some embodiments of the present specification, the spectral feature of the first pre-training speech data may be extracted, the spectral feature is inputted into the feature extraction layer of the encoder to determine the speech representation vector, then the speech representation vector is randomly masked, the speech representation vector after mask processing is inputted into the speech encoding layer to obtain an initial speech feature, and the initial speech feature may be inputted into the feature encoding layer to obtain the second speech feature corresponding to the first pre-training speech data, and the corresponding second pronunciation unit is further determined. Then, a loss value according to the first pronunciation unit and the second pronunciation unit is determined. If the loss value is greater than or equal to a loss threshold, it indicates that a similarity between the second pronunciation unit and the first pronunciation unit is low, and the predicted second pronunciation unit is inaccurate, that is, the encoder has not well learned the capability of predicting a Chinese pronunciation unit according to speech data, and training needs to be continued. Therefore, the encoder continues to be pre-trained until a pre-training stop condition is met.

Exemplarily, the pre-training stop condition may include that the loss value is less than the loss threshold, or the pre-training stop condition may include that the number of pre-training is greater than or equal to a number threshold.

As an example, if a loss value obtained by a pre-training is less than the loss threshold, it indicates that the similarity between the second pronunciation unit and the first pronunciation unit is high, and the predicted second pronunciation unit is relatively accurate, that is, the encoder has been able to predict the Chinese pronunciation unit well according to the speech data, and there is no need to continue training, so the pre-training of the encoder is stopped.

As another example, the number of pre-training may be recorded in the process of pre-training, and the number of pre-training may be increased by 1 after each determination of the second pronunciation unit. If the number of pre-training is greater than the number threshold, it indicates that the number of pre-training for the encoder is already sufficient, and if the pre-training is continued, it may not be possible to achieve better effect, so the pre-training of the encoder is stopped.

In the embodiments of the present specification, the first pronunciation unit of the first pre-training speech data is first determined through the encoder and a pronunciation unit embedding layer, then the speech representation vector of the first pre-training speech data is extracted, the second pronunciation unit is determined through the encoder and the pronunciation unit embedding layer after mask processing is performed on the speech representation vector, and the encoder is pre-trained based on the first pronunciation unit and the second pronunciation unit, so that the encoder can pay much attention to pronunciation information of characters in speech and the relationship of characters when predicting the Chinese pronunciation unit, which improves the accuracy of the encoder in performing Chinese pronunciation unit prediction, and further improves the encoding capability of the encoder for speech data.

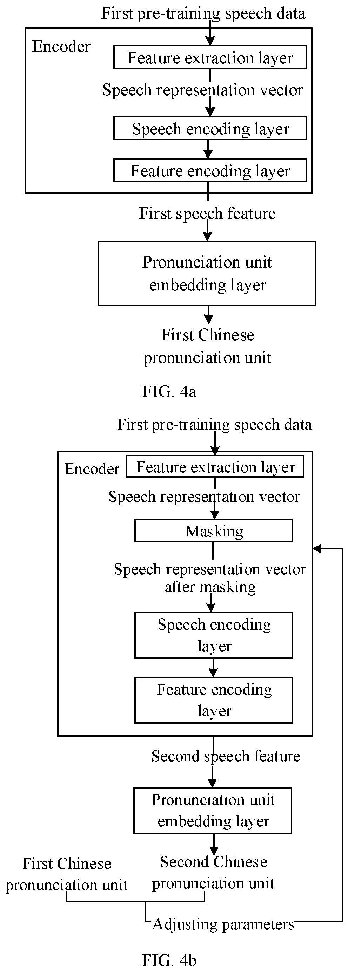

Referring to FIG. 4a, FIG. 4a shows a data flow diagram of a method for determining a Chinese pronunciation unit provided by an embodiment of the present application. The encoder and the pronunciation unit embedding layer are used in determining the Chinese pronunciation unit. The encoder includes the feature extraction layer, the speech encoding layer and the feature encoding layer. The first pre-training speech data is acquired, the first pre-training speech data is inputted into the feature extraction layer to obtain the speech representation vector of the first pre-training speech data, the speech representation vector is inputted into the speech encoding layer for encoding, then an encoding result is inputted into the feature encoding layer to obtain the first speech feature corresponding to the first pre-training speech data, and the first speech feature is inputted into the pronunciation unit embedding layer to obtain a first Chinese pronunciation unit corresponding to the first pre-training speech data.

Referring to FIG. 4b, FIG. 4b shows a data flow diagram for pre-training an encoder provided by an embodiment of the present application. When pre-training the encoder, the encoder of the speech recognition model and the pronunciation unit embedding layer are used. The encoder includes the feature extraction layer, the speech encoding layer and the feature encoding layer. The first pre-training speech data is acquired, the first pre-training speech data is inputted into the feature extraction layer to obtain the speech representation vector of the first pre-training speech data, mask processing is performed on the speech representation vector, the speech representation vector after masking is inputted into the speech encoding layer for encoding, an encoding result is inputted into the feature encoding layer to obtain the second speech feature, the second speech feature is inputted into the pronunciation unit embedding layer, a second Chinese pronunciation unit may be obtained, and the parameters of the encoder are adjusted according to the first Chinese pronunciation unit and the second Chinese pronunciation unit.

Further, the above-mentioned speech mask prediction task of predicting the second pronunciation unit according to second pre-training speech data uses the first pronunciation unit as a label of the second pre-training speech data, and the encoder is caused to learn its own output, which may lead to model collapse, that is, the encoder outputs the same features regardless of what speech data is inputted, and at this time, the speech mask prediction task becomes meaningless. Therefore, in order to improve the prediction accuracy of the encoder, the encoder may be pre-trained by using the Chinese pronunciation unit predicting task while using the speech mask prediction task, so that the encoder can predict a Chinese pronunciation unit more accurately based on speech data.

In one or more embodiments of the present specification, the cloud-side device 202 is further configured to:
acquire a plurality of first pre-training pairs, where the first pre-training pair includes second pre-training speech data and a first pre-training Chinese pronunciation unit;
perform, by using the encoder, Chinese pronunciation unit prediction on the second pre-training speech data to obtain a predicted Chinese pronunciation unit corresponding to the second pre-training speech data;
pre-train the encoder based on the first pre-training Chinese pronunciation unit and the predicted Chinese pronunciation unit.

In some embodiments, the cloud-side device 201 may acquire the first pre-training pairs from an open-source pre-training data set, and pre-train the encoder based on the first pre-training pairs. Moreover, the accuracy of a correspondence between second pre-training speech data and first pre-training Chinese pronunciation units included in the first pre-training pairs is very high, and thus the cloud-side device 202 pre-trains the encoder based on the pre-training pairs, which can improve the accuracy of the encoder in predicting the Chinese pronunciation unit. That is, the encoder may also be pre-trained based on a supervised task of Chinese pronunciation unit prediction, where the first pre-training Chinese pronunciation unit is a label of the second pre-training speech data.

In some embodiments, performing, by the cloud-side device 202, Chinese pronunciation unit prediction on the second pre-training speech data by using the encoder, includes: inputting the second pre-training speech data into the encoder to obtain a predicted speech feature of the second pre-training speech data, and inputting the predicted speech feature into the pronunciation unit embedding layer to obtain the predicted Chinese pronunciation unit corresponding to the second pre-training speech data.

In other embodiments, before performing Chinese pronunciation unit prediction on the second pre-training speech data by using the encoder, the cloud-side device 202 first extracts a spectral feature of the second pre-training speech data, then inputs the spectral feature into the encoder to obtain a predicted speech feature of the second pre-training speech data, and inputs the predicted speech feature into the pronunciation unit embedding layer to obtain the predicted Chinese pronunciation unit corresponding to the second pre-training speech data.

In still other embodiments, the encoder includes the feature extraction layer, the speech encoding layer and the feature encoding layer. Before performing Chinese pronunciation unit prediction on the second pre-training speech data by using the encoder, the cloud-side device 202 first extracts the spectral feature of the second pre-training speech data, inputs the spectral feature into the feature extraction layer for speech representation extraction and down-sampling processing to obtain a speech representation vector corresponding to the second pre-training speech data, inputs the speech representation vector into the speech encoding layer and the feature encoding layer to obtain the predicted speech feature corresponding to the second pre-training speech data, and inputs the predicted speech feature into the pronunciation unit embedding layer to obtain the predicted Chinese pronunciation unit corresponding to the second pre-training speech data.

It should be noted that an implementation process of pre-training the encoder based on the first pre-training Chinese pronunciation unit and the predicted Chinese pronunciation unit is similar to the foregoing implementation process of pre-training the model including the encoder and the decoder based on the predicted Chinese text and the sample Chinese text, and its specific implementation can be found in the relevant description of the above embodiments, which will not be repeated in this embodiment.

In the embodiments of the present specification, the speech mask prediction task and the Chinese pronunciation unit predicting task may be used to pre-train the encoder, so that the encoder can learn the capability of predicting the Chinese pronunciation units based on speech data, thereby improving the prediction accuracy of the encoder obtained by training. In addition, since the spectral feature can represent a timbre and pitch of each word, and a Chinese pronunciation unit of each word in speech, using the Chinese pronunciation unit as a prediction target in the pre-training of the encoder enables the encoder to focus more on capturing word pronunciation information of the speech. Moreover, since multiple tasks are used in the pre-training stage to perform pre-training simultaneously, original speech data includes more noise details, which may cause the model to be able to distinguish data used by different pre-training tasks, thus weakening the promotion and constraint between tasks and leading to unstable training. Therefore, using the spectral feature as an input into the entire model when pre-training the encoder can facilitate constraints between different pre-training tasks, improve the stability of model training and avoid the problem of model collapse.

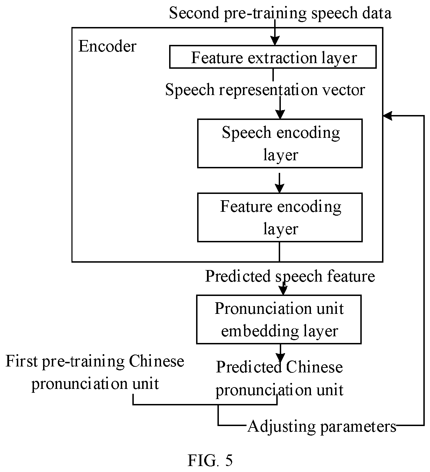

Referring to FIG. 5, FIG. 5 shows another data flow diagram for pre-training an encoder provided by an embodiment of the present application. When pre-training the encoder, the encoder and the pronunciation unit embedding layer are used. The encoder includes the feature extraction layer, the speech encoding layer and the feature encoding layer. The second pre-training speech data is inputted into the feature extraction layer to obtain the speech representation vector of the second pre-training speech data, the speech representation vector is inputted into the speech encoding layer for encoding, then the encoding result is inputted into the feature encoding layer to obtain the predicted speech feature corresponding to the second pre-training speech data, the predicted speech feature is inputted into the pronunciation unit embedding layer to obtain the predicted Chinese pronunciation unit, and the parameters of the encoder are adjusted according to the predicted Chinese pronunciation unit and the first pre-training Chinese pronunciation unit.

Part II: the pre-training process of the decoder is described.

In one or more embodiments of the present specification, the encoder include the feature encoding layer, and the cloud-side device 202 is further configured to:
acquire a first pre-training text set, where the first pre-training text set includes a plurality of unsupervised first pre-training Chinese text;
convert the first pre-training Chinese text into a second pre-training Chinese pronunciation unit, and input the second pre-training Chinese pronunciation unit into the feature encoding layer to obtain a speech feature of the second pre-training Chinese pronunciation unit;
input the speech feature of the second pre-training Chinese pronunciation unit into the decoder to obtain predicted Chinese text corresponding to the second pre-training Chinese pronunciation unit;
pre-train the decoder based on the predicted Chinese text corresponding to the second pre-training Chinese pronunciation unit and the first pre-training Chinese text.

The feature encoding layer is an encoding layer in the encoder used when a Chinese pronunciation unit is used as an input to pre-train the decoder. Since the second pre-training Chinese pronunciation unit is more abstract than speech data, the second pre-training Chinese pronunciation unit is inputted into the feature encoding layer for encoding, without going through other encoding layers of the encoder, the speech feature of the second pre-training Chinese pronunciation unit can be obtained.

In the embodiments of the present specification, when pre-training the decoder, a pre-training task used is a text prediction task, that is, Chinese text is predicted according to an inputted Chinese pronunciation unit, so as to adjust parameters of the decoder and improve the text construction capability of the decoder, so that the decoder can predict more accurate Chinese text.

In some embodiments, a corresponding relationship between Chinese text and a Chinese pronunciation unit may be determined according to a dictionary, and based on this, the first pre-training Chinese text is converted into the second pre-training Chinese pronunciation unit. Or, a model that can realize Chinese text-Chinese pronunciation unit conversion may be obtained by pre-training, and the first pre-training Chinese text is converted into the second pre-training Chinese pronunciation unit by using this model.

Exemplarily, in the process of converting the first pre-training Chinese text into the second pre-training Chinese pronunciation unit, not only a Chinese pronunciation unit of Chinese text needs to be obtained by conversion, but also a pronunciation tone (such as level tone, rising tone, falling-rising tone, falling tone) needs to be included, and Chinese pronunciation units of different words are separated, initials and finals are separated or syllables are separated, so as to avoid confusing different words.

For example, assuming that the first pre-training Chinese text is " 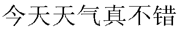 , 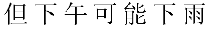 ", the second pre-training Chinese pronunciation unit obtained by conversion may be "j in1 t ian1 t ian1 qi4 zh en1 b u2 c uo4 d an4 x ia4 w u3 k e3 n eng2 x ia4 y u3". Here the number represents tone, 1 represents the level tone, 2 represents the rising tone, 3 represents the falling-rising tone and 4 represents the falling tone.

In some embodiments, the second pre-training Chinese pronunciation unit may be directly inputted into the feature encoding layer for speech representation extraction and down-sampling processing, to obtain the speech feature of the second pre-training Chinese pronunciation unit.

In other embodiments, before the second pre-training Chinese pronunciation unit is inputted into the feature encoding layer, the second pre-training Chinese pronunciation unit may be first mapped into a feature matrix, and then the feature matrix is inputted into the feature encoding layer to obtain the speech feature of the second pre-training Chinese pronunciation unit. Exemplarily, the second pre-training Chinese pronunciation unit may be mapped into the feature matrix through a Chinese pronunciation unit embedding layer.

In still other embodiments, before the second pre-training Chinese pronunciation unit is inputted into the feature encoding layer, mask processing is first performed on the second pre-training Chinese pronunciation unit, and the second pre-training Chinese pronunciation unit after mask processing is mapped into a feature matrix, and then the feature matrix is inputted into the feature encoding layer to obtain a speech feature of the second pre-training Chinese pronunciation unit.

It should be noted that inputting the speech feature of the second pre-training Chinese pronunciation unit into the decoder, to obtain the predicted Chinese text corresponding to the second pre-training Chinese pronunciation unit, and pre-training the decoder based on the predicted Chinese text corresponding to the second pre-training Chinese pronunciation unit and the first pre-training Chinese text are similar to the implementation process of inputting the speech feature into the decoder to obtain the predicted Chinese text and pre-training the model including the encoder and the decoder in the above embodiments, and its specific implementation can be found in the relevant description of the above embodiments, which is not repeated herein in this embodiment.

In the embodiments of the present specification, after the first pre-training text set is obtained, the first pre-training Chinese text is first converted into the second pre-training Chinese pronunciation unit, and then the speech feature of the second pre-training Chinese pronunciation unit is determined according to the feature encoding layer, and then the speech feature of the second pre-training speech data is inputted into the decoder. The decoder decodes in an autoregressive manner, so that the decoder considers connection between speech contexts during text prediction. Based on this, the decoder is pre-trained, which improves the accuracy of text prediction performed by the decoder obtained by pre-training, and an input for pre-training the decoder is a Chinese pronunciation unit, which is closer to a modality of speech data and more in line with downstream tasks, so the accuracy of the task can be improved when doing downstream tasks based on this decoder.

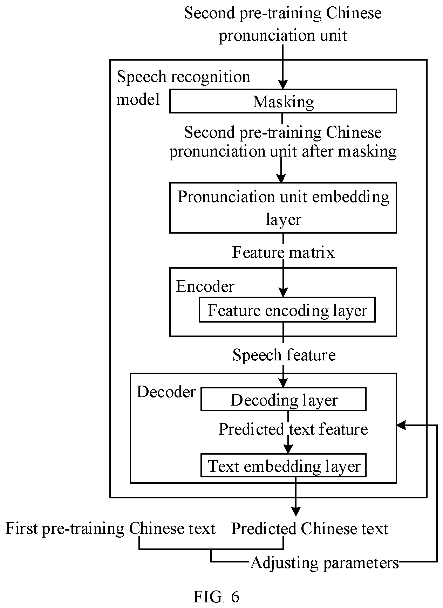

Referring to FIG. 6, FIG. 6 shows a data flow diagram for pre-training a decoder provided by an embodiment of the present application. The decoder includes a decoding layer and a text embedding layer. When pre-training the decoder, the pronunciation unit embedding layer and the feature encoding layer of the encoder are also used. Mask processing is performed on the second pre-training Chinese pronunciation unit, the second pre-training Chinese pronunciation unit after masking is inputted into the pronunciation unit embedding layer to obtain the feature matrix corresponding to the second pre-training Chinese pronunciation unit, then the feature matrix is inputted into the feature encoding layer of the encoder to obtain the speech feature of the second pre-training Chinese pronunciation unit, the speech feature is inputted into the decoding layer to obtain a predicted text feature, the predicted text feature is inputted into the text embedding layer to obtain the predicted Chinese text, and the parameters of the decoder are adjusted according to the predicted Chinese text and the first pre-training Chinese text.

Furthermore, the above method uses the Chinese pronunciation unit obtained by Chinese text conversion and the Chinese text to pre-train the decoder, so that the decoder learns grammar rules of constructing the text and improves the language modeling capability of the decoder. However, a speech recognition task is closely related to speech data, and in order to improve the capability of the decoder to locate and encapsulate the speech data, the decoder may also be pre-trained through a speech-pseudo label prediction task.

That is, the cloud-side device 202 is further configured to:
acquire a second pre-training speech set, where the second pre-training speech set includes a plurality of third pre-training speech data, and the third pre-training speech data carries a target pseudo label;
encode, by using the encoder, the third pre-training speech data to obtain a speech feature of the third pre-training speech data;
input the speech feature of the third pre-training speech data into the decoder to obtain a predicted pseudo label corresponding to the third pre-training speech data;
pre-train the decoder based on the target pseudo label and the predicted pseudo label.

In an implementation of the present specification, the second pre-training speech set may be obtained from an open-source pre-training database.

In another implementation of the present specification, a specific implementation of acquiring the second pre-training speech set by the cloud-side device 202 may include:
acquiring a plurality of unsupervised third pre-training speech data;
inputting the plurality of third pre-training speech data into a pre-trained speech encoder to obtain speech features of the plurality of third pre-training speech data;
performing clustering on the speech features of the plurality of third pre-training speech data to obtain the target pseudo label of each third pre-training speech data.

That is, the pre-trained speech encoder may be used to label the third pre-training speech data with the target pseudo-label. The target pseudo-label is a label set for a plurality of pre-training speech data with high similarity between speech features, and has no practical significance. If target pseudo-labels of two pieces of third pre-training speech data are the same, it indicates that a similarity of speech features of the two pieces of third pre-training speech data is high.

As an example, the pre-trained speech encoder may be a speech encoder which has been pre-trained based on a plurality of pre-training speech data, and may be used to extract speech features of speech data.

In some embodiments, performing clustering on the speech features of the plurality of third pre-training speech data includes determining a similarity between the speech feature of each third pre-training speech data and speech features of other third pre-training speech data, and then third pre-training speech data with similarity greater than a similarity threshold is clustered together, and a target pseudo label is set for this category.

In an embodiment of the present specification, the speech feature of the third pre-training speech data is determined by the trained speech encoder, and then the third pre-training speech data with similar speech feature is clustered together with the target pseudo label being set, so that more accurate target pseudo labels can be obtained.

After target pseudo labels corresponding to the third pre-training speech data and each speech data are acquired, the third pre-training speech data is inputted into the encoder to extract the speech feature. It should be noted that the implementation process of encoding the third pre-training speech data by using the encoder to obtain the speech feature of the third pre-training speech data is similar to the above-mentioned implementation process of encoding the sample speech data by using the encoder to obtain the speech feature of the sample speech data, and its specific implementation can be found in the relevant description of the above embodiments, which is not repeated herein in this embodiment.

In some embodiments of the present specification, the decoder includes the decoding layer, and the specific implementation of inputting the speech feature into the decoder to obtain the predicted pseudo label corresponding to the third pre-training speech data may include: inputting the speech feature into the decoding layer of the decoder to obtain a predicted text feature corresponding to the third pre-training speech data, inputting predicted text features corresponding the plurality of third pre-training speech data into a pseudo-code embedding layer to determine a probability that the third pre-training speech data has a corresponding relationship with each pseudo label, and determining a pseudo label with the highest probability as the predicted pseudo label corresponding to the third pre-training speech data.

It should be noted that an implementation process of determining the predicted text feature corresponding to the third pre-training speech data is similar to the implementation process of determining the predicted text feature in the above-mentioned embodiments, and its specific implementation can be found in the relevant description of the above embodiments, which is not repeated herein in this embodiment.

After the predicted pseudo label is determined, a loss value may be determined by using a sequence-to-sequence loss function based on the target pseudo label and the predicted pseudo label. When the loss value is greater than or equal to a loss threshold, the parameters of the decoder are adjusted based on the loss value, and until a pre-training stop condition is met, the pre-training of the decoder is stopped.

It should be noted that the pre-training stop condition is the same as the above-mentioned pre-training stop condition for pre-training the encoder, and the implementation process is also similar. Therefore, the specific implementation of pre-training the decoder based on the target pseudo label and the predicted pseudo label can be found in the relevant description of the above embodiments, which is not be repeated herein in this embodiment.

In an embodiment of this specification, the decoder is pre-trained by a speech-pseudo label prediction task, and since the decoder decodes in an autoregressive manner, information may be extracted from an output of the encoder, and such information is related to a prediction text corresponding to next pre-training speech data generated by the decoder, thus improving the capability of the decoder to locate and encapsulate the speech data.

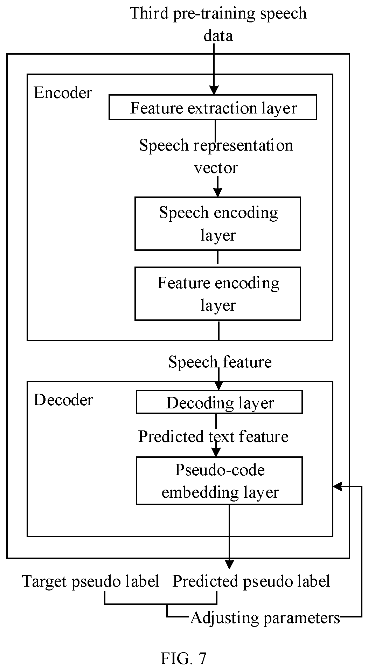

Referring to FIG. 7, FIG. 7 shows another data flow diagram for pre-training a decoder provided by an embodiment of the present specification. The decoder includes the decoding layer and the pseudo-code embedding layer. When pre-training the decoder, the encoder is also used. The encoder includes the feature extraction layer, the speech encoding layer and the feature encoding layer. The plurality of third pre-training speech data is acquired, the third pre-training speech data is inputted into the feature extraction layer to obtain a speech representation vector of the third pre-training speech data, the speech representation vector is inputted into the speech encoding layer for encoding, then an encoding result is inputted into the feature encoding layer to obtain the speech feature of the third pre-training speech data, the speech feature is inputted into the decoding layer to obtain the predicted text feature, the predicted text feature is inputted into the pseudo-code embedding layer to determine the predicted pseudo label corresponding to the third pre-training speech data, and the parameters of the decoder are adjusted according to the predicted pseudo label and the target pseudo-label.

It is worth noting that in practical application, the above-mentioned speech recognition task, speech mask prediction task, Chinese pronunciation unit predicting task, text prediction task and speech-pseudo label prediction task may be combined to pre-train the encoder and the decoder, loss values of all tasks are weighted and summed, and the parameters of the encoder and the decoder are adjusted according to a summed loss values. In this way, in the process of parameter adjustment, the effects of multiple tasks are considered, and adjustment is performed on the premise of ensuring as much as possible that the effects of multiple tasks are better, so that the speech recognition model obtained by pre-training can be applied to various tasks, and the training efficiency is improved. Moreover, the speech recognition task is added to the pre-training task, so that all tasks are affected by the effect of the speech recognition task in the optimization process, thus updating parameters in a direction of higher speech recognition effect, and improving the speech recognition effect of the speech recognition model obtained by pre-training. In addition, the spectral feature instead of speech data is used as an input into the encoder because the spectral feature ignores some speech details, which makes it more difficult for the speech recognition model to distinguish data of different tasks, so that during joint training, the adjustment of parameters of the speech recognition model by multiple tasks can be mutually constrained, and the problem of model collapse can be avoided.

It should be noted that the above description records the pre-training of the model including the encoder and the decoder (that is, pre-training the encoder and the decoder) by combining five pre-training tasks, so as to reduce the difficulty of pre-training the speech recognition model and improve the training accuracy. However, in the embodiments of the present application, before joint pre-training, the encoder and the decoder may be pre-trained first by using the text prediction task until convergence to obtain the model including the encoder and the decoder. On the one hand, the text prediction task may be understood as a simplified version of the speech recognition task (that is, a speech-text prediction task), and the text prediction task is used as a pre-training task, which makes the model easier to learn and lays a good foundation for the subsequent joint pre-training, thereby making the joint pre-training more stable. On the other hand, the learning through text prediction task initializes the pronunciation unit embedding layer, which makes it less likely for the speech mask prediction task in the joint pre-training stage to encounter the problem of model collapse.

That is, the encoder includes the feature encoding layer, and the cloud-side device 202 is further configured to:
acquire a plurality of second pre-training pairs, where the second pre-training pair includes a third pre-training Chinese pronunciation unit and second pre-training Chinese text;
input the third pre-training Chinese pronunciation unit into the feature encoding layer to obtain a speech feature of the third pre-training Chinese pronunciation unit;
input the speech feature of the third pre-training Chinese pronunciation unit into the decoder to obtain predicted Chinese text corresponding to the third pre-training Chinese pronunciation unit;
pre-train the feature encoding layer and the decoder based on the predicted Chinese text corresponding to the third pre-training Chinese pronunciation unit and the second pre-training Chinese text to obtain a model including the encoder and the decoder.

In an embodiment of the present specification, the model is pre-trained by using a supervised text prediction task, therefore, the plurality of second pre-training pairs including third pre-training Chinese pronunciation units and second pre-training Chinese text may be directly acquired, the third pre-training speech data is used as an input into the feature encoding layer, the second pre-training Chinese text is used as a label, and the feature encoding layer and the decoder are pre-trained according to the predicted Chinese text outputted by the decoder and the label to obtain the model.

In some embodiments of the present specification, the cloud-side device 202 may acquire the plurality of second pre-training pairs from an open-source pre-training data set.

In other embodiments of the present specification, a specific implementation of acquiring the plurality of second pre-training pairs by the cloud-side device 202 may include:
acquiring a plurality of second pre-training Chinese text;
converting the plurality of second pre-training Chinese text into third pre-training Chinese pronunciation units respectively;
determining the second pre-training pairs composed of the second pre-training Chinese text and corresponding third pre-training Chinese pronunciation units.

That is, since the speech recognition model predicts Chinese text according to speech data, its training data is usually speech data and Chinese text. However, because the modal gap between Chinese text and speech data is large, the Chinese pronunciation unit close to the modality of speech data is selected for pre-training. Therefore, the plurality of second pre-training Chinese text may be obtained first, the plurality of second pre-training Chinese text is converted into the third pre-training Chinese pronunciation units, and the second pre-training Chinese text and the third pre-training speech data form the second pre-training pairs, so that the accuracy of a corresponding relationship between the second pre-training Chinese text and the third pre-training Chinese pronunciation units in the pre-training pairs is very high. Pre-training the model based on the second pre-training pairs can make the model learn the capability of predicting Chinese text according to a Chinese pronunciation unit, and improve the speech recognition accuracy of the model.

After the second pre-training pairs are acquired, the third pre-training speech data in the second pre-training pairs is inputted into the feature encoding layer for processing. It should be noted that inputting the third pre-training Chinese pronunciation units into the feature encoding layer to obtain the speech features of the third pre-training Chinese pronunciation units, and inputting the speech features of the third pre-training speech data into the decoder to obtain the predicted Chinese text corresponding to the third pre-training Chinese pronunciation units is similar to the implementation process of pre-training the decoder by using the text prediction task in the above embodiments, and its specific implementation can be found in the relevant description of the above embodiments, which is not be repeated herein in this embodiment.

In some embodiments of this specification, after the predicted Chinese text corresponding to the third pre-training Chinese pronunciation unit is determined, a loss value is determined based on the predicted Chinese text and the second pre-training Chinese text. If the loss value is greater than or equal to a loss threshold, it indicates that the speech feature prediction and text prediction effects of the model are not very good, thus, the feature encoding layer and the decoder are continued to be pre-trained until a pre-training stop condition is met.

Exemplarily, the pre-training stop condition may include that the loss value is less than the loss threshold, or the pre-training stop condition may include that the number of pre-training is greater than or equal to a number threshold.

As an example, if a loss value obtained by a pre-training is less than the loss threshold, it indicates that the speech feature prediction and text prediction effects of the model are better, that is, the model has been able to predict Chinese text well according to the Chinese pronunciation unit, and there is no need to continue training. Therefore, the pre-training of the model is stopped, that is, the parameter adjustment of the feature encoding layer and the decoder is stopped.

As another example, the number of pre-training may be recorded in the pre-training process, and the number of pre-training may be increased by 1 after each determination of the second speech feature. If the number of pre-training is greater than the number threshold, it indicates that the number of pre-training of the model is already sufficient, and if the pre-training is continued, it may not be possible to achieve better effect. Therefore, the pre-training of the model is stopped, that is, the parameter adjustment of the feature encoding layer and the decoder is stopped.

In the embodiments of the present specification, before the encoder and the decoder are jointly pre-trained by using five pre-training tasks, the feature encoding layer and the decoder are pre-trained through the text prediction task to obtain a model including the encoder and the decoder, so that the feature encoding layer in the encoder has the capability of predicting the speech feature and the decoder has the capability of predicting the text. Since the Chinese pronunciation unit has less interference such as emotion of the speaker, noise and the like than the speech data, the training effect is better, and the text prediction task is used to pre-train the model in advance, so that processing rules of the pronunciation unit embedding layer are initialized in advance, thereby making the subsequent pre-training process more stable.

It should be noted that the above description records the process of pre-training the model including the encoder and the decoder by using five pre-training tasks, specifically including pre-training the feature encoding layer of the encoder and the decoder by using the text prediction task to obtain the model including the encoder and the decoder, then jointly pre-training the model including the encoder and the decoder by using the speech mask prediction task, the Chinese pronunciation unit predicting task, the speech recognition task, the text prediction task and the speech-pseudo label prediction task to obtain the speech recognition model, and sending model parameters of the speech recognition model to the end-side device 201, which uses the speech recognition model to perform speech recognition on to-be-recognized speech data to obtain target text corresponding to the to-be-recognized speech data.

Since the specific downstream tasks are different, the end-side device 201 may fine-tune the parameters of the speech recognition model before using the speech recognition model to perform speech recognition on the to-be-recognized speech data.

That is, the end-side device 201 is further configured to:
acquire a check set, where the check set includes a plurality of speech check pairs and a plurality of Chinese pronunciation unit check pairs, the speech check pair includes check speech data and corresponding check Chinese text, and the Chinese pronunciation unit check pair includes the check speech data and a corresponding check Chinese pronunciation unit;
perform, by using the encoder of the speech recognition model, Chinese pronunciation unit prediction on the check speech data to obtain a speech feature of the check speech data and a predicted Chinese pronunciation unit;
input the speech feature of the check speech data into the decoder of the speech recognition model to obtain predicted Chinese text corresponding to the check speech data;
fine-tune the speech recognition model based on the predicted Chinese pronunciation unit, the check Chinese pronunciation unit, the predicted Chinese text and the check Chinese text, to obtain, in a case where a fine-tuning stop condition is met, a fine-tuned speech recognition model.

In one or more embodiments of the present specification, fine-tuning of the speech recognition model is implemented based on a supervised fine-tuning task. Since the downstream task of the speech recognition model is the speech recognition task, when doing fine-tuning, a supervised fine-tuning task is the speech recognition task, and the speech recognition task is to determine Chinese text according to speech data, so it is necessary to acquire the speech check pairs including the check speech data and the corresponding check Chinese text. Moreover, since the encoder of the speech recognition model can generate speech features suitable for speech recognition, and since in Chinese speech recognition, the Chinese pronunciation unit establishes a connection between Chinese text and speech data, that is, both the Chinese text and the speech data can be uniquely mapped to the same Chinese pronunciation unit sequence, the Chinese pronunciation unit predicting capability of the encoder can be improved, and the encoder can generate speech features more suitable for speech recognition. Therefore, another supervised fine-tuning task, namely, the Chinese pronunciation unit predicting task, can be set, and the Chinese pronunciation unit predicting task is to determine the Chinese pronunciation unit according to the speech data, so it is required to acquire the Chinese pronunciation unit check pairs including the check speech data and the corresponding check Chinese pronunciation units.

As an example, the speech check pairs and the Chinese pronunciation unit check pairs may be acquired from an open-source check database, or the speech check pairs and the Chinese pronunciation unit check pairs may be generated manually.

In a specific implementation, in order to obtain the Chinese pronunciation unit, a pronunciation unit embedding layer may be added to the speech recognition model, the pronunciation unit embedding layer is connected with the encoder and is configured to map a speech feature into a Chinese pronunciation unit. Then the speech feature outputted by the encoder is inputted into the pronunciation unit embedding layer, and a predicted Chinese pronunciation unit corresponding to check speech data may be obtained.

In some embodiments of the present specification, the encoder may include the feature extraction layer, the speech encoding layer and the feature encoding layer. Performing, by using the encoder of the speech recognition model, Chinese pronunciation unit prediction on the check speech data includes: first, inputting the check speech data into the feature extraction layer for speech representation extraction and down-sampling processing to obtain a speech representation vector of the check speech data, and then inputting the speech representation vector into the speech encoding layer and the feature encoding layer to obtain a speech feature of the check speech data, where the speech feature is obtained by combining context pronunciation of the speech data, and then inputting the speech feature of the check speech data into the pronunciation unit embedding layer to obtain the predicted Chinese pronunciation unit corresponding to the check speech data.

It should be noted that the implementation of inputting the speech feature of the check speech data into the decoder of the speech recognition model to obtain the predicted Chinese text corresponding to the check speech data is similar to the implementation process of inputting the speech feature into the decoder to obtain the predicted Chinese text, and its specific implementation can be found in the relevant description of the above embodiments, which is not be repeated herein in this embodiment.

In some embodiments of the present specification, after the predicted Chinese pronunciation unit and the check Chinese text are obtained, a first loss value may be determined according to the predicted Chinese pronunciation unit and a sample Chinese pronunciation unit, a second loss value may be determined according to the predicted Chinese text and the check Chinese text, and the first loss value and the second loss value are summed to obtain a third loss value. If the third loss value is greater than or equal to a loss threshold, parameters of the speech recognition model (including parameters of the decoder and the encoder) are fine-tuned based on this loss value, and then a return to execution of the step of performing, by using the encoder of the speech recognition model, Chinese pronunciation unit prediction on the check speech data to obtain the speech feature of the check speech data and the predicted Chinese pronunciation unit is performed, and until the fine-tuning stop condition is met, the fine-tuning of the parameters of the speech recognition model is stopped to obtain the fine-tuned speech recognition model.

In some embodiments of the present specification, that fine-tuning stop condition may be that the loss value is less than the loss threshold, or the fine-tuning stop condition may be that the number of iterative fine-tuning is greater than or equal to a number threshold.

As an example, if a loss value obtained after a fine-tuning is less than the loss threshold, it indicates that the speech recognition model has been able to perform speech recognition well, and there is no need to adjust the parameters, so the fine-tuning is stopped and the fine-tuned speech recognition model is obtained.

As another example, the number of iterative fine-tuning may be recorded, and the number of iterative fine-tuning may be increased by 1 after each determination of the predicted Chinese sample. If the number of iterative fine-tuning is greater than the number threshold, it indicates that the number of iterative fine-tuning for the parameters of the speech recognition model is already sufficient, and if the fine-tuning is continued, it may not be possible to achieve better effect. Therefore, the fine-tuning is stopped and the fine-tuned speech recognition model is obtained.

In the embodiments of the present specification, the speech recognition model is fine-tuned by using the speech recognition task and the Chinese pronunciation unit predicting task, that is, the two supervised tasks are combined to fine-tune the speech recognition model, so that the fine-tuning of the parameters of the speech recognition model is influenced by the two tasks, which not only improves the training efficiency of the speech recognition model and the recognition accuracy of the speech recognition model, but also makes the speech recognition model applicable to more downstream tasks and improves the applicability of the speech recognition model obtained by training.

In another optional implementation of the present specification, a specific implementation of acquiring the check set by the end-side device 201 may include:
acquiring a plurality of speech check pairs, where the speech check pair includes check speech data and check Chinese text;
performing Chinese pronunciation unit conversion on each check Chinese text to obtain a check Chinese pronunciation unit corresponding to the check speech data;
determining a Chinese pronunciation unit check pair composed of the check speech data and a corresponding check Chinese pronunciation unit;
determining the check set including the plurality of speech check pairs and a plurality of Chinese pronunciation unit check pairs.

That is, the plurality of speech check pairs may be acquired first, and then the check Chinese text in the speech check pairs may be converted into check Chinese pronunciation units. Since there is a corresponding relationship between check Chinese text and check speech data, there is also a corresponding relationship between a check Chinese pronunciation unit and the check speech data, then the check Chinese pronunciation unit and the corresponding checked speech data form a Chinese pronunciation unit check pair, and the plurality of Chinese pronunciation unit check pairs and the plurality of speech check pairs form the check set.

As an example, a corresponding relationship between the Chinese text and the Chinese pronunciation unit may be determined according to a dictionary, and based on this, the check Chinese text is converted into the check Chinese pronunciation unit. Or, a model that can realize text-Chinese pronunciation unit conversion may be obtained by pre-training, and the check Chinese text is converted into the check speech data by using this model.

Exemplarily, the Chinese pronunciation unit may be pinyin, syllables or Chinese phonemes. In the process of converting the check Chinese text into the check Chinese pronunciation unit, not only the pinyin of the Chinese text should be obtained by converting, but also the pronunciation tone (such as level tone, rising tone, falling-rising tone, falling tone) should be included, the pinyin of different words should be separated, and initials and finals should be separated, so as to avoid confusing different words.

For example, assuming that the check Chinese text is " 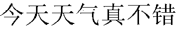 , 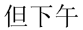 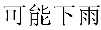 ", the check Chinese pronunciation unit may be "j in1 t ian1 t ian1 qi4 zh en1 b u2 c uo4 d an4 x ia4 w u3 k e3 n eng2 x ia4 y u3". Where the number represents tone, 1 represents the level tone, 2 represents the rising tone, 3 represents the falling-rising tone and 4 represents the falling tone.

In this case, there is a corresponding relationship among the check speech data, the check Chinese pronunciation unit and the check Chinese text, so it can be understood that there is a corresponding relationship between check pairs used by speech recognition task and Chinese pronunciation unit predicting task, which can improve the training accuracy of joint fine-tuning.

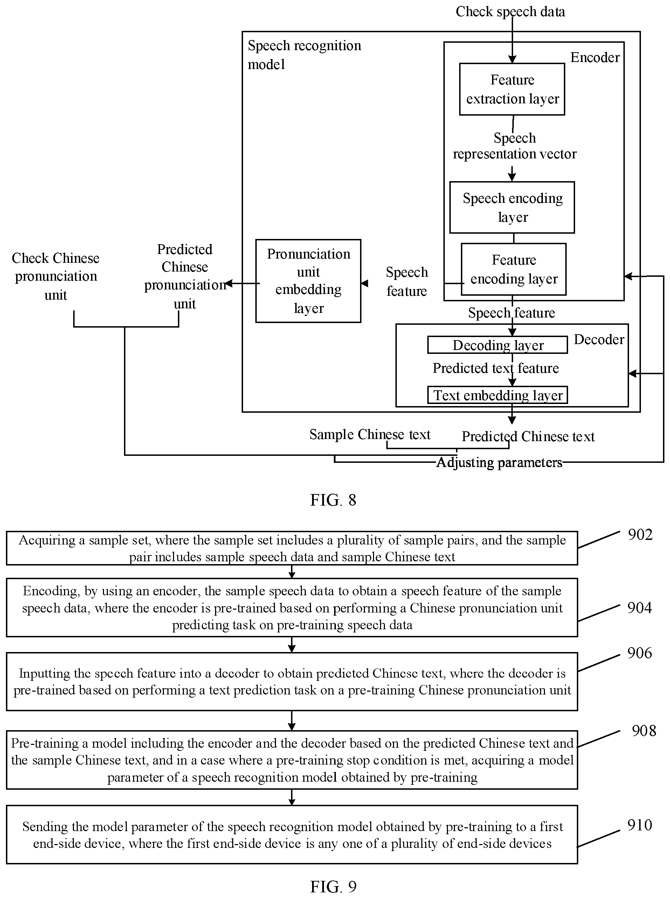

Referring to FIG. 8, FIG. 8 shows a data flow diagram of a method for fine-tuning a speech recognition model provided by an embodiment of the present specification. The speech recognition model includes the encoder, the pronunciation unit embedding layer and the decoder. The encoder includes the feature extraction layer, the speech encoding layer and the feature encoding layer, and the decoder includes the decoding layer and the text embedding layer. The check speech data is inputted into the feature extraction layer to obtain a speech representation vector of the check speech data, the speech representation vector is inputted into the speech encoding layer for encoding, then an encoding result is inputted into the feature encoding layer to obtain a speech feature, the speech feature is inputted into the pronunciation unit embedding layer to obtain a predicted Chinese pronunciation unit, the speech feature is inputted into the decoding layer to obtain a predicted text feature, and the predicted text feature is inputted into the text embedding layer to obtain predicted Chinese text. After the predicted Chinese pronunciation unit and the predicted Chinese text are obtained, the parameters of the encoder and the decoder in the speech recognition model are fine-tuned (that is, parameters are adjusted) according to the predicted Chinese pronunciation unit, the check Chinese pronunciation unit, the predicted Chinese text and the sample Chinese text, and until the fine-tuning stop condition is met, the fine-tuned speech recognition model is obtained.

It should be noted that the pre-training of the speech recognition model in this solution includes three stages. The first stage: using the text prediction task to train the whole model to obtain the model including the encoder and the decoder. The second stage: using the Chinese pronunciation unit predicting task and the speech mask prediction task to pre-train the encoder, using the text prediction task and the speech-pseudo label prediction task to pre-train the decoder, and using the supervised speech recognition task to train the whole model, and these five tasks may be executed separately or simultaneously to obtain the speech recognition model. The third stage: using the supervised speech recognition task and the supervised Chinese pronunciation unit predicting task to fine-tune the parameters of the speech recognition model to obtain the fine-tuned speech recognition model. In addition, the first stage and the second stage are executed by the cloud-side device 202, and the third stage is executed by the end-side device 201, or all three stages may be executed by the cloud-side device 202.

In addition, the text prediction task is adopted in the first stage because the Chinese pronunciation unit has much less interference than speech data, and the training through the text prediction task initializes usage rules of the pronunciation unit embedding layer in advance, which makes the pre-training in the second stage more stable. The five tasks are used in the second stage for joint training to improve the training efficiency. In the third stage, the downstream speech recognition task is added to the fine-tuning task in advance, so that all tasks are affected by the speech recognition task in a process of optimizing the model parameters, so that the parameters are updated in a direction of better speech recognition effect, the effect of the downstream task can be evaluated in advance, and the work efficiency can be improved.

In the solutions applied to the embodiments of the present specification, the encoder and decoder have been pre-trained before training the speech recognition model, so that the number of sample speech data and sample Chinese text required when training to obtain the speech recognition model is relatively small, which reduces the burden of labeling personnel and reduces the difficulty of acquiring labeled data. In view of the feature that Chinese text is an ideographic language, that is, there is a big gap between speech data and Chinese text, and the same pronunciation may correspond to hundreds of Chinese characters, in the solutions, a modality of Chinese pronunciation unit is added to the pre-training process of the model. This is because the Chinese pronunciation unit is a bridge to establish the relationship between speech data and Chinese text, that is, both speech data and Chinese text can be uniquely mapped to a Chinese pronunciation unit sequence. In the pre-training process, the encoder is pre-trained based on performing the speech mask prediction task and the Chinese pronunciation unit predicting task on the pre-training speech data, and both of the two tasks are to map the speech data into a Chinese pronunciation unit sequence, which enables the encoder to capture pronunciation information in the speech data and is beneficial to speech recognition. Moreover, the encoder is pre-trained based on performing the text prediction task and the speech-pseudo label prediction task on the pre-training Chinese pronunciation unit, and at the same time, the decoder has the capability of constructing the text through the speech feature, thereby improving the language modeling capability of the decoder. The encoder and the decoder have certain speech recognition capability through pre-training, thus, training the encoder and the decoder after pre-training can improve the training efficiency and the training precision. In addition, an input into the model used in the pre-training process is pre-training speech data or pre-training Chinese pronunciation units, both of which are similar to the modality of the speech data inputted when applying the speech recognition model. Therefore, when using the speech recognition model to perform recognition on the to-be-recognized speech data, the recognition accuracy can be improved. Moreover, through a large number of low-cost unlabeled speech data and unlabeled Chinese text, and only using a small amount of speech-text labeled data, the speech recognition model for Chinese language with high accuracy can be obtained by training, which reduces the use of labeled data, reduces labor costs and improves training efficiency.

FIG. 9 shows a flowchart of a data processing method for a speech recognition model applied to a cloud-side device provided by an embodiment of the present specification. The cloud-side device is connect with a plurality of end-side devices, and the data processing method for the speech recognition model specifically includes the following steps.

Step 902: acquiring a sample set, where the sample set includes a plurality of sample pairs, and the sample pair includes sample speech data and sample Chinese text.

Step 904: encoding, by using an encoder, the sample speech data to obtain a speech feature of the sample speech data, where the encoder is pre-trained based on performing a Chinese pronunciation unit predicting task on pre-training speech data.

Step 906: inputting the speech feature into a decoder to obtain predicted Chinese text, where the decoder is pre-trained based on performing a text prediction task on a pre-training Chinese pronunciation unit.

Step 908: pre-training a model including the encoder and the decoder based on the predicted Chinese text and the sample Chinese text, and in a case where a pre-training stop condition is met, acquiring a model parameter of a speech recognition model obtained by pre-training.

Step 910: sending the model parameter of the speech recognition model obtained by pre-training to a first end-side device, where the first end-side device is any one of the plurality of end-side devices.

In one or more embodiments of the present specification, a specific implementation of pre-training the encoder based on performing the Chinese pronunciation unit on the pre-training speech data may include:
acquiring a first pre-training speech set, where the first pre-training speech set includes a plurality of unsupervised first pre-training speech data;
encoding, by using the encoder, the first pre-training speech data to obtain a first speech feature corresponding to the first pre-training speech data, and determining a first pronunciation unit based on the first speech feature;
performing mask processing on the first pre-training speech data;
encoding, by using the encoder, the first pre-training speech data after mask processing to obtain a second speech feature corresponding to the first pre-training speech data after mask processing, and determining a second pronunciation unit based on the second speech feature;
pre-training the encoder based on the first pronunciation unit and the second pronunciation unit corresponding to the first pre-training speech data.

In one or more embodiments of this specification, before encoding, by using the encoder, the first pre-training speech data to obtain the first speech feature corresponding to the first pre-training speech data, the method further includes:
extracting a spectral feature of the first pre-training speech data;
encoding, by using the encoder, the first pre-training speech data to obtain the first speech feature corresponding to the first pre-training speech data includes:
   inputting the spectral feature of the first pre-training speech data into the encoder to obtain the first speech feature corresponding to the first pre-training speech data.

In one or more embodiments of the present specification, a specific implementation of pre-training the encoder based on performing the Chinese pronunciation unit on the pre-training speech data may include:
acquiring a plurality of first pre-training pairs, where the first pre-training pair includes second pre-training speech data and a first pre-training Chinese pronunciation unit;
performing, by using the encoder, Chinese pronunciation unit prediction on the second pre-training speech data to obtain a predicted Chinese pronunciation unit corresponding to the second pre-training speech data;
pre-training the encoder based on the first pre-training Chinese pronunciation unit and the predicted Chinese pronunciation unit.

In one or more embodiments of the present specification, the encoder includes a feature encoding layer, and a specific implementation of pre-training the decoder based on performing the text prediction task on the pre-training Chinese pronunciation unit may include:
acquiring a first pre-training text set, where the first pre-training text set includes a plurality of unsupervised first pre-training Chinese text;
converting the first pre-training Chinese text into a second pre-training Chinese pronunciation unit, and inputting the second pre-training Chinese pronunciation unit into the feature encoding layer to obtain a speech feature of the second pre-training Chinese pronunciation unit;
inputting the speech feature of the second pre-training Chinese pronunciation unit into the decoder to obtain predicted Chinese text corresponding to the second pre-training Chinese pronunciation unit;
pre-training the decoder based on the predicted Chinese text corresponding to the second pre-training Chinese pronunciation unit and the first pre-training Chinese text.

In one or more embodiments of the present specification, a specific implementation of pre-training the decoder based on performing the text prediction task on the pre-training Chinese pronunciation unit may include:
acquiring a second pre-training speech set, where the second pre-training speech set includes a plurality of third pre-training speech data, and the third pre-training speech data carries a target pseudo label;
encoding, by using the encoder, the third pre-training speech data to obtain a speech feature of the third pre-training speech data;
inputting the speech feature of the third pre-training speech data into the decoder to obtain a predicted pseudo label corresponding to the third pre-training speech data;
pre-training the decoder based on the target pseudo label and the predicted pseudo label.

In one or more embodiments of the present specification, a specific implementation of acquiring the second pre-training speech set may include:
acquiring a plurality of unsupervised third pre-training speech data;
input the plurality of third pre-training speech data into a pre-trained speech encoder to obtain speech features of the plurality of third pre-training speech data;
perform clustering on the speech features of the plurality of third pre-training speech data to obtain the target pseudo label of each third pre-training speech data.

In one or more embodiments of the present specification, the encoder includes a feature encoding layer, and the method further includes:
acquiring a plurality of second pre-training pairs, where the second pre-training pair includes a third pre-training Chinese pronunciation unit and second pre-training Chinese text;
inputting the third pre-training Chinese pronunciation unit into the feature encoding layer to obtain a speech feature of the third pre-training Chinese pronunciation unit;
inputting the speech feature of the third pre-training Chinese pronunciation unit into the decoder to obtain predicted Chinese text corresponding to the third pre-training Chinese pronunciation unit;
pre-training the feature encoding layer and the decoder based on the predicted Chinese text corresponding to the third pre-training Chinese pronunciation unit and the second pre-training Chinese text to obtain the model including the encoder and the decoder.

It should be noted that the specific implementation of the data processing method for the speech recognition model applied to the cloud-side device is the same as the operations performed by the cloud-side device in the data processing system for the speech recognition model, and the specific implementation can be found in the relevant description of the above embodiments, which is not be repeated herein in this embodiment.

In the solutions applied to the embodiments of the present specification, the encoder and decoder have been pre-trained before training to obtain the speech recognition model, so that the number of sample speech data and sample Chinese text required when training to obtain the speech recognition model is relatively small, which reduces the burden of labeling personnel and reduces the difficulty of acquiring labeled data. In view of the feature that Chinese data is an ideographic language, that is, there is a big gap between speech and text, the same pronunciation may correspond to hundreds of Chinese characters, and a modality of pronunciation unit is added to the pre-training process of the model. This is because the pronunciation unit is a bridge to establish the relationship between speech and text, that is, both the speech and the text can be uniquely mapped to a pronunciation unit sequence. In the pre-training process, the encoder is obtained by pre-training based on performing the speech mask prediction task and the pronunciation unit predicting task on the pre-training speech data, and both of the two tasks are to map the speech data into a pronunciation unit sequence, which enables the encoder to capture pronunciation information in a speech signal and is beneficial to speech recognition. Moreover, the decoder is obtained by pre-training based on performing the text prediction task on the pre-training Chinese pronunciation unit, and the decoder has the capability of constructing the text through the speech feature, thereby improving the language modeling capability of the decoder. The encoder and the decoder have certain speech recognition capability through pre-training, thus, training the encoder and the decoder after pre-training can improve the training efficiency and the training precision. In addition, an input into the model used in the pre-training process is pre-training speech data or pre-training Chinese pronunciation units, both of which are similar to the modality of speech data inputted when applying the speech recognition model. Therefore, when using the speech recognition model to perform recognition on the to-be-recognized speech data, the recognition accuracy can be improved. Moreover, through a large number of low-cost unlabeled speech data and unlabeled Chinese text, and only using a small amount of speech-text labeled data, the speech recognition model for Chinese language with high accuracy can be obtained by training, which reduces the use of labeled data, reduces labor costs and improves training efficiency.

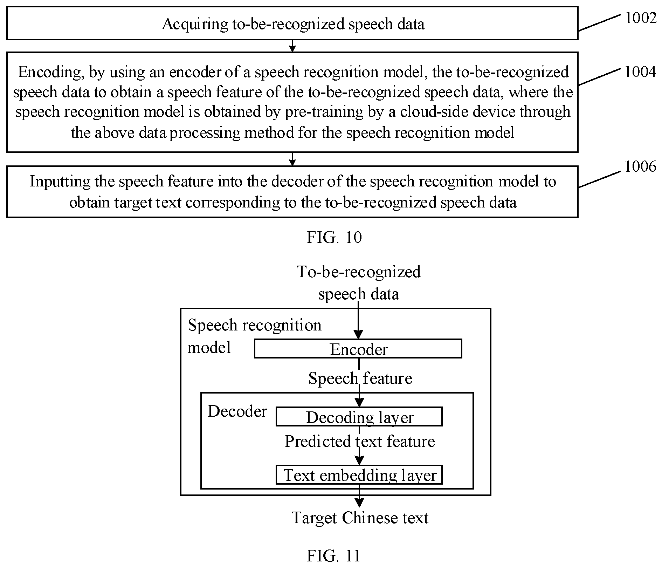

FIG. 10 shows a flowchart of a speech recognition method applied to an end-side device provided by an embodiment of the present specification. The end-side device is connected with a cloud-side device, and the speech recognition method specifically includes the following steps.

Step 1002: acquiring to-be-recognized speech data.

Step 1004: encoding, by using an encoder of a speech recognition model, the to-be-recognized speech data to obtain a speech feature of the to-be-recognized speech data, where the speech recognition model is obtained by pre-training by the cloud-side device through the above data processing method for the speech recognition model.

In one or more embodiments of the present specification, before encoding, by using the encoder of the speech recognition model, the to-be-recognized speech data, the method further includes:
acquiring a check set, where the check set includes a plurality of speech check pairs and a plurality of Chinese pronunciation unit check pairs, the speech check pair includes check speech data and corresponding check Chinese text, and the Chinese pronunciation unit check pair includes the check speech data and a corresponding check Chinese pronunciation unit; performing, by using the encoder of the speech recognition model, Chinese pronunciation unit prediction on the check speech data to obtain a speech feature of the check speech data and a predicted Chinese pronunciation unit; inputting the speech feature of the check speech data into the decoder of the speech recognition model to obtain predicted Chinese text corresponding to the check speech data; fine-tuning the speech recognition model based on the predicted Chinese pronunciation unit, the check Chinese pronunciation unit, the predicted Chinese text and the check Chinese text, to obtain, in a case where a fine-tuning stop condition is met, a fine-tuned speech recognition model.

After the fine-tuning is completed, the fine-tuned speech recognition model is used to perform recognition on the to-be-recognized speech data, and target text corresponding to the to-be-recognized speech data may be obtained.

Step 1006: inputting the speech feature into the decoder of the speech recognition model to obtain the target text corresponding to the to-be-recognized speech data.

In one or more embodiments of the present specification, referring to FIG. 11, FIG. 11 shows a data flow diagram of a speech recognition task performed by a speech recognition model provided by an embodiment of the present specification. The speech recognition model includes the encoder and the decoder, the to-be-recognized speech data is inputted into the encoder of the speech recognition model to obtain the speech feature of the to-be-recognized speech data. The decoder includes the decoding layer and the text embedding layer, the speech feature is inputted into the decoding layer to obtain a predicted text feature, and the predicted text feature is inputted into the text embedding layer to output the target text corresponding to the to-be-recognized speech data.

In one or more embodiments of the present specification, a specific implementation of acquiring the to-be-recognized speech data may include:
receiving a speech recognition request, where the speech recognition request carries the to-be-recognized speech data;
acquiring the to-be-recognized speech data from the speech recognition request;
correspondingly, after step 1006, the method further includes:
   sending the target text to a front end for display;
   receiving revised text corresponding to the target text inputted by a user at the front end;
   updating the speech recognition model according to the revised text and the to-be-recognized speech data to obtain an updated speech recognition model.

As an example, after the target text is fed back to the front end for display, the user may correct the target text, the revised text corresponding to the target text inputted by the user at the front end is received, and then the speech recognition model is updated according to the revised text and the to-be-recognized speech data, thereby improving the speech recognition accuracy of the speech recognition model.

It should be noted that the specific implementation of the speech recognition method applied to the end-side device is the same as the operations performed by the end-side device in the above-mentioned data processing system for the speech recognition model, and the specific implementation can be found in the relevant description of the above embodiments, which is not be repeated herein in this embodiment.

In the solutions applied to the embodiments of the present specification, the encoder and the decoder have been pre-trained before training to obtain the speech recognition model, so that the number of sample speech data and sample Chinese text required when training to obtain the speech recognition model is relatively small, which reduces the burden of labeling personnel and reduces the difficulty of acquiring labeled data. In view of the feature that Chinese data is an ideographic language, that is, there is a big gap between speech and text, the same pronunciation may correspond to hundreds of Chinese characters, and a modality of pronunciation unit is added to the pre-training process of the model. This is because the pronunciation unit is a bridge to establish the relationship between the speech and the text, that is, both the speech and the text can be uniquely mapped to a pronunciation unit sequence. In the pre-training process, the encoder is obtained by pre-training based on performing the speech mask prediction task and the pronunciation unit predicting task on the pre-training speech data, and both of the two tasks are to map the speech data into a pronunciation unit sequence, which enables the encoder to capture pronunciation information in a speech signal and is beneficial to speech recognition. Moreover, the decoder is obtained by pre-training based on performing the text prediction task on the pre-training Chinese pronunciation unit, and the decoder has the capability of constructing the text through the speech feature, thereby improving the language modeling capability of the decoder. The encoder and the decoder have certain speech recognition capability through pre-training, thus, training the encoder and the decoder after pre-training can improve the training efficiency and the training precision. In addition, an input into the model used in the pre-training process is pre-training speech data or pre-training Chinese pronunciation units, both of which are similar to the modality of speech data inputted when applying the speech recognition model. Therefore, when using the speech recognition model to recognize the to-be-recognized speech data, the recognition accuracy can be improved. Moreover, through a large number of low-cost unlabeled speech data and unlabeled Chinese text, and only using a small amount of speech-text labeled data, the speech recognition model for Chinese language with high accuracy can be obtained by training, which reduces the use of labeled data, reduces labor costs and improves training efficiency.

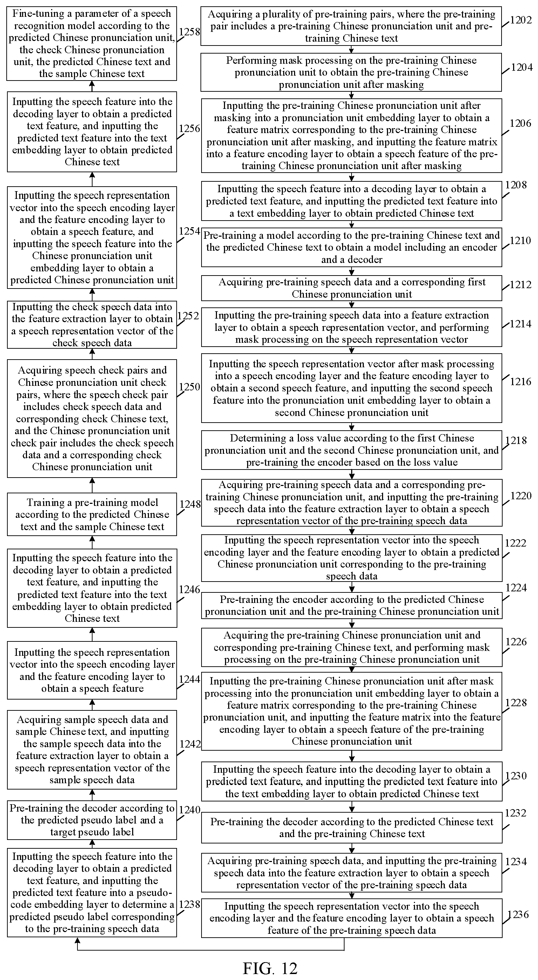

With reference to FIG. 12, the data processing method for the speech recognition model is further described by taking an application of the data processing method for the speech recognition model provided in the present specification in the speech recognition model for Chinese language as an example. FIG. 12 shows a flowchart of a processing process of a data processing method for a speech recognition model provided by an embodiment of the present specification, which specifically includes the following steps.

Step 1202: acquiring a plurality of pre-training pairs, where the pre-training pair includes a pre-training Chinese pronunciation unit and a pre-training Chinese text.

Step 1204: performing mask processing on the pre-training Chinese pronunciation unit to obtain the pre-training Chinese pronunciation unit after masking.

Step 1206: inputting the pre-training Chinese pronunciation unit after masking into a pronunciation unit embedding layer to obtain a feature matrix corresponding to the pre-training Chinese pronunciation unit after masking, and inputting the feature matrix into a feature encoding layer to obtain a speech feature of the pre-training Chinese pronunciation unit after masking.

Step 1208: inputting the speech feature into a decoding layer to obtain a predicted text feature, and inputting the predicted text feature into a text embedding layer to obtain predicted Chinese text.

Step 1210: pre-training a model according to the pre-training Chinese text and the predicted Chinese text to obtain a model including an encoder and a decoder.

Exemplarily, steps 1202-1210 are the process of pre-training the model including the encoder and the decoder using the text prediction task in the first stage.

Step 1212: acquiring pre-training speech data and a corresponding first Chinese pronunciation unit.

Step 1214: inputting the pre-training speech data into a feature extraction layer to obtain a speech representation vector, and performing mask processing on the speech representation vector.

Step 1216: inputting the speech representation vector after mask processing into a speech encoding layer and the feature encoding layer to obtain a second speech feature, and inputting the second speech feature into the pronunciation unit embedding layer to obtain a second Chinese pronunciation unit.

Step 1218: determining a loss value according to the first Chinese pronunciation unit and the second Chinese pronunciation unit, and pre-training the encoder based on the loss value.

Exemplarily, steps 1212-1218 are the process of pre-training the encoder using the speech mask prediction task in the second stage.

Step 1220: acquiring pre-training speech data and a corresponding pre-training Chinese pronunciation unit, and inputting the pre-training speech data into the feature extraction layer to obtain a speech representation vector of the pre-training speech data.

Step 1222: inputting the speech representation vector into the speech encoding layer and the feature encoding layer to obtain a predicted Chinese pronunciation unit corresponding to the pre-training speech data.

Step 1224: pre-training the encoder according to the predicted Chinese pronunciation unit and the pre-training Chinese pronunciation unit.

Exemplarily, steps 1220-1224 are the process of pre-training the encoder using the Chinese pronunciation unit predicting task in the second stage.

Step 1226: acquiring the pre-training Chinese pronunciation unit and corresponding pre-training Chinese text, and performing mask processing on the pre-training Chinese pronunciation unit.

Step 1228: inputting the pre-training Chinese pronunciation unit after mask processing into the pronunciation unit embedding layer to obtain a feature matrix corresponding to the pre-training Chinese pronunciation unit, and inputting the feature matrix into the feature encoding layer to obtain a speech feature of the pre-training Chinese pronunciation unit.

Step 1230: inputting the speech feature into the decoding layer to obtain a predicted text feature, and inputting the predicted text feature into the text embedding layer to obtain predicted Chinese text.

Step 1232: pre-training the decoder according to the predicted Chinese text and the pre-training Chinese text.

Exemplarily, steps 1226-1232 are the process of pre-training the decoder by using the text prediction task in the second stage.

Step 1234: acquiring pre-training speech data, and inputting the pre-training speech data into the feature extraction layer to obtain a speech representation vector of the pre-training speech data.

Step 1236: inputting the speech representation vector into the speech encoding layer and the feature encoding layer to obtain a speech feature of the pre-training speech data.

Step 1238: inputting the speech feature into the decoding layer to obtain a predicted text feature, and inputting the predicted text feature into a pseudo-code embedding layer to determine a predicted pseudo label corresponding to the pre-training speech data.

Step 1240: pre-training the decoder according to the predicted pseudo label and a target pseudo label.

Exemplarily, steps 1234-1240 are the process of pre-training the decoder by using the speech-pseudo label prediction task in the second stage.

Step 1242: acquiring sample speech data and sample Chinese text, and inputting the sample speech data into the feature extraction layer to obtain a speech representation vector of the sample speech data.

Step 1244: inputting the speech representation vector into the speech encoding layer and the feature encoding layer to obtain a speech feature.

Step 1246: inputting the speech feature into the decoding layer to obtain a predicted text feature, and inputting the predicted text feature into the text embedding layer to obtain predicted Chinese text.

Step 1248: training according to the predicted Chinese text and the sample Chinese text.

Exemplarily, steps 1242-1248 are the process of pre-training the model including the encoder and the decoder by using the speech recognition task in the second stage.

Step 1250: acquiring speech check pairs and Chinese pronunciation unit check pairs, where the speech check pair includes check speech data and corresponding check Chinese text, and the Chinese pronunciation unit check pair includes the check speech data and a corresponding check Chinese pronunciation unit.

Step 1252: inputting the check speech data into the feature extraction layer to obtain a speech representation vector of the check speech data.

Step 1254: inputting the speech representation vector into the speech encoding layer and the feature encoding layer to obtain a speech feature, and inputting the speech feature into the Chinese pronunciation unit embedding layer to obtain a predicted Chinese pronunciation unit.

Step 1256: inputting the speech feature into the decoding layer to obtain a predicted text feature, and inputting the predicted text feature into the text embedding layer to obtain predicted Chinese text.

Step 1258: fine-tuning a parameter of a speech recognition model according to the predicted Chinese pronunciation unit, the check Chinese pronunciation unit, the predicted Chinese text and the sample Chinese text.

Exemplarily, steps 1250-1258 are the process of fine-tuning the parameter of the speech recognition model in the third stage by using the speech recognition task and the Chinese pronunciation unit predicting task.

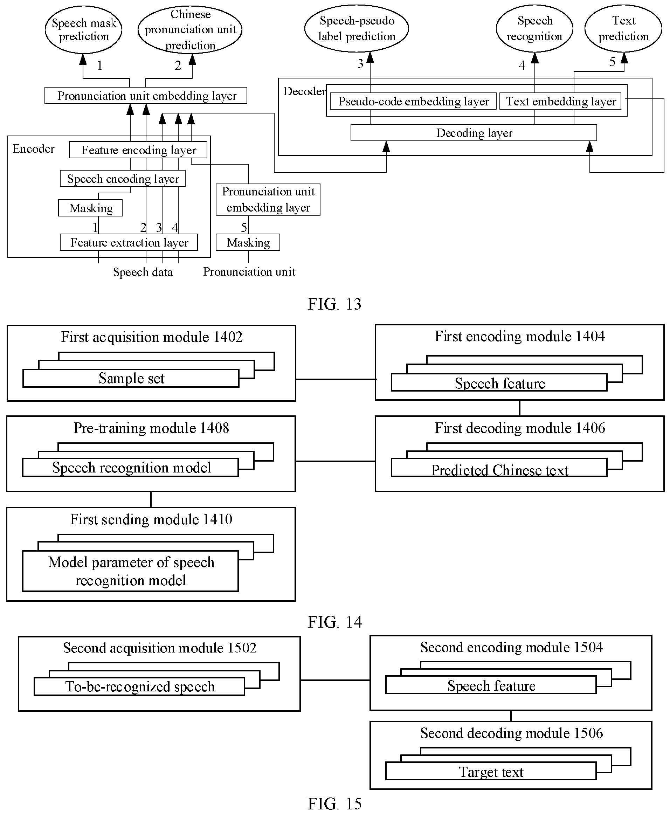

Referring to FIG. 13, FIG. 13 shows a data flow diagram for joint training of a speech recognition model provided by an embodiment of the present application. In the figure, line 1 represents a data flow direction for executing the speech mask prediction task, line 2 represents a data flow direction for executing the Chinese pronunciation unit predicting task, line 3 represents a data flow direction for executing the speech-pseudo label prediction task, line 4 represents a data flow direction for executing the speech recognition task, and line 5 represents a data flow direction for executing the text prediction task. The specific process of data flow direction in each task can be found in the above-mentioned relevant description of FIG. 3, FIG. 4a, FIG. 4b, FIG. 5, FIG. 6 and FIG. 7, which is not be repeated herein in this embodiment.

In the solutions applied to the embodiments of the present specification, the encoder and the decoder have been pre-trained before training to obtain the speech recognition model, so that the number of sample speech data and sample Chinese text required when training to obtain the speech recognition model is relatively small, which reduces the burden of labeling personnel and reduces the difficulty of acquiring labeled data. In view of the feature that Chinese data is an ideographic language, that is, there is a big gap between speech and text, the same pronunciation may correspond to hundreds of Chinese characters, and a modality of pronunciation unit is added to the pre-training process of the model. This is because the pronunciation unit is a bridge to establish the relationship between speech and text, that is, both the speech and the text can be uniquely mapped to a pronunciation unit sequence. In the pre-training process, the encoder is obtained by pre-training based on performing the speech mask prediction task and the pronunciation unit predicting task on the pre-training speech data, and both of the two tasks are to map the speech data into a pronunciation unit sequence, which enables the encoder to capture pronunciation information in a speech signal and is beneficial to speech recognition. Moreover, the decoder is obtained by pre-training based on performing the text prediction task on the pre-training Chinese pronunciation unit, and the decoder has the capability of constructing the text through the speech feature, thereby improving the language modeling capability of the decoder. The encoder and the decoder have certain speech recognition capability through pre-training, thus, training the encoder and the decoder after pre-training can improve the training efficiency and the training precision. In addition, an input into the model used in the pre-training process is pre-training speech data or pre-training Chinese pronunciation units, both of which are similar to the modality of speech data inputted when applying the speech recognition model. Therefore, when using the speech recognition model to perform recognition on the to-be-recognized speech data, the recognition accuracy can be improved. Moreover, through a large number of low-cost unlabeled speech data and unlabeled Chinese text, and only using a small amount of speech-text labeled data, the speech recognition model for Chinese language with high accuracy can be obtained by training, which reduces the use of labeled data, reduces labor costs and improves training efficiency.

Corresponding to the above-mentioned embodiments of the data processing method for the speech recognition model applied to the cloud-side device, the present specification further provides an embodiment of a data processing apparatus for a speech recognition model applied to the cloud-side device. FIG. 14 shows a schematic structural diagram of a data processing apparatus for a speech recognition model applied to a cloud-side device provided by an embodiment of the present specification. As shown in FIG. 14, the apparatus includes:
a first acquisition module 1402, configured to acquire a sample set, where the sample set includes a plurality of sample pairs, and the sample pair includes sample speech data and sample Chinese text;
a first encoding module 1404, configured to encode, by using an encoder, the sample speech data to obtain a speech feature of the sample speech data, where the encoder is pre-trained based on performing a Chinese pronunciation unit predicting task on pre-training speech data;
a first decoding module 1406, configured to input the speech feature into a decoder to obtain predicted Chinese text, where the decoder is pre-trained based on performing a text prediction task on a pre-training Chinese pronunciation unit;
a pre-training module 1408, configured to pre-train a model including the encoder and the decoder based on the predicted Chinese text and the sample Chinese text, and in a case where a pre-training stop condition is met, acquire a model parameter of a speech recognition model obtained by pre-training;
a first sending module 1410, configured to send the model parameter of the speech recognition model obtained by pre-training to a first end-side device, where the first end-side device is any one of a plurality of end-side devices.

In one or more embodiments of the present specification, the apparatus further includes an encoder pre-training module, and the encoder pre-training module is configured to:
acquire a first pre-training speech set, where the first pre-training speech set includes a plurality of unsupervised first pre-training speech data;
encode, by using the encoder, the first pre-training speech data to obtain a first speech feature corresponding to the first pre-training speech data, and determine a first pronunciation unit based on the first speech feature;
perform mask processing on the first pre-training speech data;
encode, by using the encoder, the first pre-training speech data after mask processing to obtain a second speech feature corresponding to the first pre-training speech data after mask processing, and determine a second pronunciation unit based on the second speech feature;
pre-train the encoder based on the first pronunciation unit and the second pronunciation unit corresponding to the first pre-training speech data.

In one or more embodiments of the present specification, the encoder pre-training module is further configured to:
extract a spectral feature of the first pre-training speech data;
input the spectral feature of the first pre-training speech data into the encoder to obtain the first speech feature corresponding to the first pre-training speech data.

In one or more embodiments of the present specification, the encoder pre-training module is configured to:
acquire a plurality of first pre-training pairs, where the first pre-training pair includes second pre-training speech data and a first pre-training Chinese pronunciation unit;
perform, by using the encoder, Chinese pronunciation unit prediction on the second pre-training speech data to obtain a predicted Chinese pronunciation unit corresponding to the second pre-training speech data;
pre-train the encoder based on the first pre-training Chinese pronunciation unit and the predicted Chinese pronunciation unit.

In one or more embodiments of the present specification, the encoder include a feature encoding layer.

The apparatus further includes a decoder pre-training module, and the decoder pre-training module is configured to:
acquire a first pre-training text set, where the first pre-training text set includes a plurality of unsupervised first pre-training Chinese text;
convert the first pre-training Chinese text into a second pre-training Chinese pronunciation unit, and input the second pre-training Chinese pronunciation unit into the feature encoding layer to obtain a speech feature of the second pre-training Chinese pronunciation unit;
input the speech feature of the second pre-training Chinese pronunciation unit into the decoder to obtain predicted Chinese text corresponding to the second pre-training Chinese pronunciation unit;
pre-train the decoder based on the predicted Chinese text corresponding to the second pre-training Chinese pronunciation unit and the first pre-training Chinese text.

In one or more embodiments of the present specification, the decoder pre-training module is configured to:
acquire a second pre-training speech set, where the second pre-training speech set includes a plurality of third pre-training speech data, and the third pre-training speech data carries a target pseudo label;
encode, by using the encoder, the third pre-training speech data to obtain a speech feature of the third pre-training speech data;
input the speech feature of the third pre-training speech data into the decoder to obtain a predicted pseudo label corresponding to the third pre-training speech data;
pre-train the decoder based on the target pseudo label and the predicted pseudo label.

In one or more embodiments of the present specification, the decoder pre-training module is further configured to:
acquire a plurality of unsupervised third pre-training speech data;
input the plurality of third pre-training speech data into a pre-trained speech encoder to obtain speech features of the plurality of third pre-training speech data;
perform clustering on the speech features of the plurality of third pre-training speech data to obtain the target pseudo label of each third pre-training speech data.

In one or more embodiments of the present specification, the encoder include a feature encoding layer.

The first acquisition module is further configured to:
acquire a plurality of second pre-training pairs, where the second pre-training pair includes a third pre-training Chinese pronunciation unit and second pre-training Chinese text;
input the third pre-training Chinese pronunciation unit into the feature encoding layer to obtain a speech feature of the third pre-training Chinese pronunciation unit;
input the speech feature of the third pre-training Chinese pronunciation unit into the decoder to obtain predicted Chinese text corresponding to the third pre-training Chinese pronunciation unit;
pre-train the feature encoding layer and the decoder based on the predicted Chinese text corresponding to the third pre-training Chinese pronunciation unit and the second pre-training Chinese text to obtain a model including the encoder and the decoder.

In the solutions applied to the embodiments of the present specification, the encoder and the decoder have been pre-trained before training to obtain the speech recognition model, so that the number of sample speech data and sample Chinese text required when training to obtain the speech recognition model is relatively small, which reduces the burden of labeling personnel and reduces the difficulty of acquiring labeled data. In view of the feature that Chinese data is an ideographic language, that is, there is a big gap between speech and text, the same pronunciation may correspond to hundreds of Chinese characters, and a modality of pronunciation unit is added to the pre-training process of the model. This is because the pronunciation unit is a bridge to establish the relationship between speech and text, that is, both the speech and the text can be uniquely mapped to a pronunciation unit sequence. In the pre-training process, the encoder is obtained by pre-training based on performing the speech mask prediction task and the pronunciation unit predicting task on the pre-training speech data, and both of the two tasks are to map the speech data into a pronunciation unit sequence, which enables the encoder to capture pronunciation information in a speech signal and is beneficial to speech recognition. Moreover, the decoder is obtained by pre-training based on performing the text prediction task on the pre-training Chinese pronunciation unit, and the decoder has the capability of constructing the text through the speech feature, thereby improving the language modeling capability of the decoder. The encoder and the decoder have certain speech recognition capability through pre-training, thus, training the encoder and the decoder after pre-training can improve the training efficiency and the training precision. In addition, an input into the model used in the pre-training process is pre-training speech data or pre-training Chinese pronunciation units, both of which are similar to the modality of speech data inputted when applying the speech recognition model. Therefore, when using the speech recognition model to recognize the to-be-recognized speech data, the recognition accuracy can be improved. Moreover, through a large number of low-cost unlabeled speech data and unlabeled Chinese text, and only using a small amount of speech-text labeled data, the speech recognition model for Chinese language with high accuracy can be obtained by training, which reduces the use of labeled data, reduces labor costs and improves training efficiency.

The above is a schematic solution of the data processing apparatus for the speech recognition model applied to the cloud-side device in this embodiment. It should be noted that the technical solution of the data processing apparatus for the speech recognition model applied to the cloud-side device and the technical solution of the data processing method for the speech recognition model applied to the cloud-side device belong to the same concept, and details of the technical solution of the data processing apparatus for the speech recognition model applied to the cloud-side device that are not described in detail can be found in the description of the technical solution of the data processing method for the speech recognition model applied to the cloud-side device.

Corresponding to the above-mentioned embodiments of the speech recognition method, the present specification further provides an embodiment of a speech recognition apparatus. FIG. 15 shows a schematic structural diagram of a speech recognition apparatus provided by an embodiment of the present specification. As shown in FIG. 15, the apparatus includes:
a second acquisition module 1502, configured to acquire to-be-recognized speech data;
a second encoding module 1504, configured to encode, by using an encoder of a speech recognition model, the to-be-recognized speech data to obtain a speech feature of the to-be-recognized speech data, where the speech recognition model is obtained by pre-training by the cloud-side device through the above data processing method for the speech recognition model;
a second decoding module 1506, configured to input the speech feature into the decoder of the speech recognition model to obtain target text corresponding to the to-be-recognized speech data.

In one or more embodiments of the present specification, the apparatus further includes a fine-tuning module, configured to:
acquire a check set, where the check set includes a plurality of speech check pairs and a plurality of Chinese pronunciation unit check pairs, the speech check pair includes check speech data and corresponding check Chinese text, and the Chinese pronunciation unit check pair includes the check speech data and a corresponding check Chinese pronunciation unit;
perform, by using the encoder of the speech recognition model, Chinese pronunciation unit prediction on the check speech data to obtain a speech feature of the check speech data and a predicted Chinese pronunciation unit;
input the speech feature of the check speech data into the decoder of the speech recognition model to obtain predicted Chinese text corresponding to the check speech data;
fine-tune the speech recognition model based on the predicted Chinese pronunciation unit, the check Chinese pronunciation unit, the predicted Chinese text and the check Chinese text, to obtain, in a case where a fine-tuning stop condition is met, a fine-tuned speech recognition model.

In one or more embodiments of the present specification, the apparatus further includes a display module, an input module and an update module;
the display module is configured to send target text to a front end for display;
the input module is configured to receive revised text corresponding to the target text inputted by a user at the front end;
the update module is configured to update the speech recognition model according to the revised text and the to-be-recognized speech data to obtain an updated speech recognition model.

In the solutions applied to the embodiments of the present specification, the encoder and the decoder have been pre-trained before training to obtain the speech recognition model, so that the number of sample speech data and sample Chinese text required when training to obtain the speech recognition model is relatively small, which reduces the burden of labeling personnel and reduces the difficulty of acquiring labeled data. In view of the feature that Chinese data is an ideographic language, that is, there is a big gap between speech and text, the same pronunciation may correspond to hundreds of Chinese characters, and a modality of pronunciation unit is added to the pre-training process of the model. This is because the pronunciation unit is a bridge to establish the relationship between speech and text, that is, both the speech and the text can be uniquely mapped to a pronunciation unit sequence. In the pre-training process, the encoder is obtained by pre-training based on performing the speech mask prediction task and the pronunciation unit predicting task on the pre-training speech data, and both of the two tasks are to map the speech data into a pronunciation unit sequence, which enables the encoder to capture pronunciation information in a speech signal and is beneficial to speech recognition. Moreover, the decoder is obtained by pre-training based on performing the text prediction task on the pre-training Chinese pronunciation unit, and the decoder has the capability of constructing the text through the speech feature, thereby improving the language modeling capability of the decoder. The encoder and the decoder have certain speech recognition capability through pre-training, thus, training the encoder and the decoder after pre-training can improve the training efficiency and the training precision. In addition, an input into the model used in the pre-training process is pre-trained speech data or pre-training Chinese pronunciation units, both of which are similar to the modality of speech data inputted when applying the speech recognition model. Therefore, when using the speech recognition model to recognize the to-be-recognized speech data, the recognition accuracy can be improved. Moreover, through a large number of low-cost unlabeled speech data and unlabeled Chinese text, and only using a small amount of speech-text labeled data, the speech recognition model for Chinese language with high accuracy can be obtained by training, which reduces the use of labeled data, reduces labor costs and improves training efficiency.

The above is a schematic solution of the speech recognition apparatus in this embodiment. It should be noted that the technical solution of the speech recognition apparatus and the technical solution of the above-mentioned speech recognition method belong to the same concept, and details of the technical solution of the data processing apparatus that are not described in detail can be found in the description of the technical solution of the data processing method.

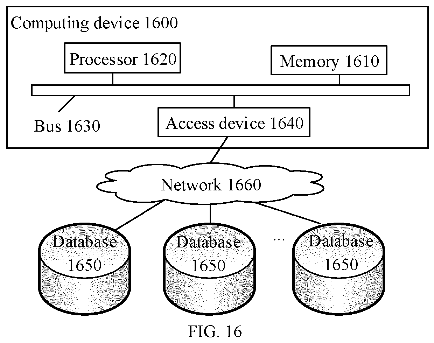

FIG. 16 shows a structural block diagram of a computing device 1600 provided by an embodiment of the present specification. Components of the computing device 1600 include, but are not limited to, a memory 1610 and a processor 1620. The processor 1620 is connected to the memory 1610 through a bus 1630, and databases 1650 are configured to store data.

The computing device 1600 further includes an access device 1640, and the access device 1640 enables the computing device 1600 to communicate via one or more networks 1660. Examples of these networks include a public switched telephone network (PSTN, Public Switched Telephone Network), a local area network (LAN, Local Area Network), a wide area network (WAN, Wide Area Network), a personal area network (PAN, Personal Area Network) or a combination of communication networks such as the Internet. The access device 1640 may include one or more of any type of wired or wireless network interfaces (e.g., a network interface controller (NIC, network interface controller)), such as an IEEE802.11 wireless local area network (WLAN, Wireless Local Area Network) wireless interface, a worldwide interoperability for microwave access (Wi-MAX, Worldwide Interoperability for Microwave Access) interface, an Ethernet interface, an universal serial bus (USB, Universal Serial Bus) interface, a cellular network interface, a Bluetooth interface, a near field communication (NFC, Near Field Communication) interface, and so on.

In an embodiment of the present specification, the above components of the computing device 1600 and other components not shown in FIG. 16 may also be connected to each other, for example, through a bus. It should be understood that the structural block diagram of the computing device shown in FIG. 16 is only for illustrative purposes, and is not a limitation on the scope of the present specification. Those skilled in the art may add or replace other components as needed.

The computing device 1600 may be any type of static or mobile computing device, including a mobile computer or a mobile computing device (e.g., a tablet computer, a personal digital assistant, a laptop computer, a notebook computer, a netbooks, etc.), a mobile phone (e.g., a smart phone), a wearable computing device (e.g., a smart watch, smart glasses, etc.) or other types of mobile devices, or a stationary computing device such as a desktop computer or a personal computer (PC, Personal Computer). The computing device 1600 may also be a mobile or stationary server.

The processor 1620 is configured to execute the following computer-executable instructions, and when the computer-executable instructions are executed by the processor, the steps of the above-mentioned data processing method for the speech recognition model, or the steps of the above-mentioned speech recognition method are implemented.

The above is a schematic solution of the computing device in this embodiment. It should be noted that the technical solution of the computing device and the technical solution of the above-mentioned data processing method for the speech recognition model or the speech recognition method belong to the same concept, and details of the technical solution of the computing device that are not described in detail can be found in the description of the technical solution of the data processing method for the speech recognition model or the speech recognition method.

An embodiment of the present specification further provides a computer-readable storage medium, having computer-executable instructions stored thereon, and when the computer-executable instructions are executed by a processor, the steps of the above-mentioned data processing method for the speech recognition model, or the steps of the above-mentioned speech recognition method are implemented.

The above is a schematic solution of the computer-readable storage medium in this embodiment. It should be noted that the technical solution of the storage medium and the technical solution of the above-mentioned data processing method for the speech recognition model or the speech recognition method belong to the same concept, and details of the technical solution of the storage medium that are not described in detail can be found in the description of the technical solution of the data processing method for the speech recognition model or the speech recognition method.

An embodiment of the present specification further provides a computer program, and when the computer program is executed in a computer, the computer is caused to execute the steps of the data processing method for the speech recognition model or implement the steps of the speech recognition method.

The above is a schematic solution of the computer program in this embodiment. It should be noted that the technical solution of the computer program and the technical solution of the above-mentioned data processing method for the speech recognition model or the speech recognition method belong to the same concept, and details of the technical solution of the computer program that are not described in detail can be found in the description of the technical solution of the data processing method for the speech recognition model or the speech recognition method.

Specific embodiments of the present specification have been described above. Other embodiments are within the scope of the appended claims. In some cases, the operations or steps described in the claims may be performed in a different order than in the embodiments and still can achieve the desired results. In addition, the processes depicted in the drawings do not necessarily require the specific order shown or the sequential order to achieve the desired results. In some embodiments, multitasking and parallel processing may also be possible or may be advantageous.

The computer instructions include computer program code, the computer program code may be in a source code form, an object code form, an executable file or some intermediate forms, etc. The computer-readable medium may include any entity or apparatus capable of carrying the computer program code, a recording medium, a USB flash drive, a mobile hard disk, a magnetic disk, an optical disk, a computer memory, a read-only memory (ROM, Read-Only Memory), a random access memory (RAM, Random Access Memory), an electric carrier signal, a telecommunication signal, a software distribution medium, etc.

It should be noted that for brevity of description, all the aforementioned method embodiments are expressed as a series of operation combinations, but those skilled in the art should know that the embodiments of the present specification are not limited by the described operation sequences, because according to the embodiments of the present specification, some steps may be performed in other sequences or simultaneously. Secondly, those skilled in the art should also know that the embodiments described in the specification are all preferred embodiments, and the operations and modules involved are not necessarily required in the embodiments of the present specification.

In the above-mentioned embodiments, the description of each embodiment has its own emphasis, and reference for parts not described in detail in a certain embodiment may be made to the relevant description of other embodiments.

The preferred embodiments of the present specification disclosed above are only used to help describe the present specification. Optional embodiments do not describe all the details in detail, nor do they limit the present invention to the specific embodiments described. Obviously, many modifications and changes may be made according to the contents of the embodiments in the present specification. These embodiments are selected and described in detail in this specification in order to better explain the principles and practical applications of the embodiments in the present specification, so that those skilled in the art can better understand and use the present specification. The present specification is limited only by the claims and their full scope and equivalents.

## Claims

1. A data processing system for a speech recognition model, comprising:
a cloud-side device, configured to: acquire a sample set, wherein the sample set comprises a plurality of sample pairs, and the sample pair comprises sample speech data and sample Chinese text; encode, by using an encoder, the sample speech data to obtain a speech feature of the sample speech data, wherein the encoder is pre-trained based on performing a Chinese pronunciation unit predicting task on pre-training speech data; input the speech feature into a decoder to obtain predicted Chinese text, wherein the decoder is pre-trained based on performing a text prediction task on a pre-training Chinese pronunciation unit; pre-train a model comprising the encoder and the decoder based on the predicted Chinese text and the sample Chinese text, and in a case where a pre-training stop condition is met, acquire a model parameter of a speech recognition model obtained by pre-training;
wherein the cloud-side device is further configured to send the model parameter of the speech recognition model obtained by pre-training to an end-side device;
the end-side device, configured to perform speech recognition on to-be-recognized speech data by using the speech recognition model to obtain target text corresponding to the to-be-recognized speech data.

2. The data processing system according to claim 1, wherein the cloud-side device is further configured to:
acquire a first pre-training speech set, wherein the first pre-training speech set comprises a plurality of unsupervised first pre-training speech data;
encode, by using the encoder, the first pre-training speech data to obtain a first speech feature corresponding to the first pre-training speech data, and determine a first pronunciation unit based on the first speech feature;
perform mask processing on the first pre-training speech data;
encode, by using the encoder, the first pre-training speech data after mask processing to obtain a second speech feature corresponding to the first pre-training speech data after mask processing, and determine a second pronunciation unit based on the second speech feature;
pre-train the encoder based on the first pronunciation unit and the second pronunciation unit corresponding to the first pre-training speech data.

3. The data processing system according to claim 2, wherein the cloud-side device is specifically configured to:
extract a spectral feature of the first pre-training speech data;
input the spectral feature of the first pre-training speech data into the encoder to obtain the first speech feature corresponding to the first pre-training speech data.

4. The data processing system according to claim 2, wherein the cloud-side device is further configured to:
acquire a plurality of first pre-training pairs, wherein the first pre-training pair comprises second pre-training speech data and a first pre-training Chinese pronunciation unit;
perform, by using the encoder, Chinese pronunciation unit prediction on the second pre-training speech data to obtain a predicted Chinese pronunciation unit corresponding to the second pre-training speech data;
pre-train the encoder based on the first pre-training Chinese pronunciation unit and the predicted Chinese pronunciation unit.

5. The data processing system according to claim 1, wherein the encoder comprises a feature encoding layer, and the cloud-side device is further configured to:
acquire a first pre-training text set, wherein the first pre-trained text set comprises a plurality of unsupervised first pre-training Chinese text;
convert the first pre-training Chinese text into a second pre-training Chinese pronunciation unit, and input the second pre-training Chinese pronunciation unit into the feature encoding layer to obtain a speech feature of the second pre-training Chinese pronunciation unit;
input the speech feature of the second pre-training Chinese pronunciation unit into the decoder to obtain predicted Chinese text corresponding to the second pre-training Chinese pronunciation unit;
pre-train the decoder based on the predicted Chinese text corresponding to the second pre-training Chinese pronunciation unit and the first pre-training Chinese text.

6. The data processing system according to claim 1, wherein the cloud-side device is further configured to:
acquire a second pre-training speech set, wherein the second pre-training speech set comprises a plurality of third pre-training speech data, and the third pre-training speech data carries a target pseudo label;
encode, by using the encoder, the third pre-training speech data to obtain a speech feature of the third pre-training speech data;
input the speech feature of the third pre-training speech data into the decoder to obtain a predicted pseudo label corresponding to the third pre-training speech data;
pre-train the decoder based on the target pseudo label and the predicted pseudo label.

7. The data processing system according to claim 6, wherein the cloud-side device is specifically configured to:
acquiring a plurality of unsupervised third pre-training speech data;
input the plurality of third pre-training speech data into a pre-trained speech encoder to obtain speech features of the plurality of third pre-training speech data;
perform clustering on the speech features of the plurality of third pre-training speech data to obtain the target pseudo label of each third pre-trained speech data.

8. The data processing system according to any one of claims 1 to 7, wherein the encoder comprises a feature encoding layer, and the cloud-side device is further configured to:
acquire a plurality of second pre-training pairs, wherein the second pre-training pair comprises a third pre-training Chinese pronunciation unit and second pre-training Chinese text;
input the third pre-training Chinese pronunciation unit into the feature encoding layer to obtain a speech feature of the third pre-training Chinese pronunciation unit;
input the speech feature of the third pre-training Chinese pronunciation unit into the decoder to obtain predicted Chinese text corresponding to the third pre-training Chinese pronunciation unit;
pre-train the feature encoding layer and the decoder based on the predicted Chinese text corresponding to the third pre-training Chinese pronunciation unit and the second pre-training Chinese text to obtain the model comprising the encoder and the decoder.

9. A data processing method for a speech recognition model, applied to a cloud-side device, wherein the cloud-side device is connected with a plurality of end-side devices, and the method comprises:
acquiring a sample set, wherein the sample set comprises a plurality of sample pairs, and the sample pair comprises sample speech data and sample Chinese text;
encoding, by using an encoder, the sample speech data to obtain a speech feature of the sample speech data, wherein the encoder is pre-trained based on performing a Chinese pronunciation unit predicting task on pre-training speech data;
inputting the speech feature into a decoder to obtain predicted Chinese text, wherein the decoder is pre-trained based on performing a text prediction task on a pre-training Chinese pronunciation unit;
pre-training a model comprising the encoder and the decoder based on the predicted Chinese text and the sample Chinese text, and in a case where a pre-training stop condition is met, acquiring a model parameter of a speech recognition model obtained by pre-training;
sending the model parameter of the speech recognition model obtained by pre-training to a first end-side device, wherein the first end-side device is any one of the plurality of end-side devices.

10. A speech recognition method, applied to an end-side device, wherein the end-side device is connected with a cloud-side device, and the method comprises:
acquiring to-be-recognized speech data;
encoding, by using an encoder of a speech recognition model, the to-be-recognized speech data to obtain a speech feature of the to-be-recognized speech data, wherein the speech recognition model is obtained by pre-training by the cloud-side device through the data processing method for the speech recognition model according to claim 9;
inputting the speech feature into the decoder of the speech recognition model to obtain target text corresponding to the to-be-recognized speech data.

11. The speech recognition method according to claim 10, further comprising:
acquiring a check set, wherein the check set comprises a plurality of speech check pairs and a plurality of Chinese pronunciation unit check pairs, the speech check pair comprises check speech data and corresponding check Chinese text, and the Chinese pronunciation unit check pair comprises the check speech data and a corresponding check Chinese pronunciation unit;
performing, by using the encoder of the speech recognition model, Chinese pronunciation unit prediction on the check speech data to obtain a speech feature of the check speech data and a predicted Chinese pronunciation unit;
inputting the speech feature of the check speech data into the decoder of the speech recognition model to obtain predicted Chinese text corresponding to the check speech data;
fine-tuning the speech recognition model based on the predicted Chinese pronunciation unit, the check Chinese pronunciation unit, the predicted Chinese text and the check Chinese text, to obtain, in a case where a fine-tuning stop condition is met, a fine-tuned speech recognition model.

12. The speech recognition method according to claim 10, wherein after inputting the speech feature into the decoder of the speech recognition model to obtain the target text corresponding to the to-be-recognized speech data, the method further comprises:
sending the target text to a front end for display;
receiving revised text corresponding to the target text inputted by a user at the front end;
updating the speech recognition model according to the revised text and the to-be-recognized speech data to obtain an updated speech recognition model.

13. A computing device, comprising:
a memory and a processor;
wherein the memory is configured to store computer-executable instructions, the processor is configured to execute the computer-executable instructions, and when the computer-executable instructions are executed by the processor, the steps of the data processing method for the speech recognition model according to claim 9 or the steps of the speech recognition method according to any one of claims 10 to 12 are implemented.

14. A computer-readable storage medium, having computer-executable instructions stored thereon, and when the computer-executable instructions are executed by a processor, the steps of the data processing method for the speech recognition model according to claim 9 or the steps of the speech recognition method according to any one of claims 10 to 12 are implemented.
